# EUROPEAN PATENT APPLICATION

(11) **EP 4 592 929 A1**
(43) Date of publication of application: **30.07.2025**
(21) Application number: 23867164.8
(22) Date of filing: 11.08.2023
(51) Int. Cl.: G06Q 20/10

(54) **FUND PROCESSING METHOD AND APPARATUS**

(30) Priority: 23.09.2022 CN 202211164884
(71) Applicant: ALIPAY.COM CO., LTD., Shanghai 200120 (CN)
(72) Inventor: MAO, Dasheng, Hangzhou, Zhejiang 310000 (CN); FANG, Shujiang, Hangzhou, Zhejiang 310000 (CN); ZHOU, Hui, Hangzhou, Zhejiang 310000 (CN); JIA, Haonan, Hangzhou, Zhejiang 310000 (CN); KONG, Yanyan, Hangzhou, Zhejiang 310000 (CN); ZHANG, Chongfeng, Hangzhou, Zhejiang 310000 (CN)
(74) Representative: Finnegan Europe LLP
(86) International application number: PCT/CN2023/112441
(87) International publication number: WO 2024/060870

(57) **Abstract**

Embodiments of this specification provide funds processing methods and apparatuses. The funds processing method includes the following: acquiring payment information of a funds sharing service provisioned for a specific payment intention, where the payment information is obtained after order payment is made by using the funds sharing service as a payment mode; if an allocation instruction for target participating members of the funds sharing service is detected, performing funds allocation based on a quantity of members of the target participating members and a payment amount included in the payment information, to obtain funds shares of the target participating members; and performing deduction from balance amounts of the target participating members in the funds sharing service based on the funds shares.

## Description

### TECHNICAL FIELD

This specification relates to the field of data processing technologies, and in particular, to funds processing methods and apparatuses.

### BACKGROUND

With the development of information technologies, a service provider provides a networked service platform for a user with the support of an Internet technology, and a user may obtain a corresponding service on the networked service platform. As an increasing quantity of types of services are available, a fund account becomes an indispensable element in an online transaction service. By using the fund account, a user can easily complete transfer and pay services through a computer and the Internet. In addition, with the network development of various conventional services, a fund account is increasingly widely applied.

### SUMMARY

One or more embodiments of this specification provide a funds processing method. The method includes the following: acquiring payment information of a funds sharing service provisioned for a specific payment intention, where the payment information is obtained after order payment is made by using the funds sharing service as a payment mode; if an allocation instruction for target participating members of the funds sharing service is detected, performing funds allocation based on a quantity of members of the target participating members and a payment amount included in the payment information, to obtain funds shares of the target participating members; and performing deduction from balance amounts of the target participating members in the funds sharing service based on the funds shares.

One or more embodiments of this specification provide another funds processing method. The method includes the following: acquiring and displaying a member list of a funds sharing service, where the member list is displayed after payment information is obtained by performing order payment based on the funds sharing service; receiving an allocation instruction submitted for target participating members of the funds sharing service, to perform funds allocation based on a quantity of members of the target participating members and a payment amount included in the payment information; and receiving an allocation confirmation instruction submitted for funds shares of the target participating members obtained for funds allocation, to perform deduction from balance amounts of the target participating members in the funds sharing service based on the funds shares.

One or more embodiments of this specification provide a funds processing apparatus. The apparatus includes the following: a payment information acquisition module, configured to acquire payment information of a funds sharing service provisioned for a specific payment intention, where the payment information is obtained after order payment is made by using the funds sharing service as a payment mode; a funds allocation module, configured to: if an allocation instruction for target participating members of the funds sharing service is detected, perform funds allocation based on a quantity of members of the target participating members and a payment amount included in the payment information, to obtain funds shares of the target participating members; and a deduction module, configured to perform deduction from balance amounts of the target participating members in the funds sharing service based on the funds shares.

One or more embodiments of this specification provide another funds processing apparatus. The apparatus includes the following: a member list display module, configured to acquire and display a member list of a funds sharing service, where the member list is displayed after payment information is obtained by performing order payment based on the funds sharing service; an allocation instruction receiving module, configured to receive an allocation instruction submitted for target participating members of the funds sharing service, to perform funds allocation based on a quantity of members of the target participating members and a payment amount included in the payment information; and an allocation confirmation instruction receiving module, configured to receive an allocation confirmation instruction submitted for funds shares of the target participating members obtained for funds allocation, to perform deduction from balance amounts of the target participating members in the funds sharing service based on the funds shares.

One or more embodiments of this specification provide a funds processing device. The device includes a processor; and a storage configured to store computer-executable instructions, where when the computer-executable instructions are executed, the processor is enabled to perform the following operations: acquiring payment information of a funds sharing service provisioned for a specific payment intention, where the payment information is obtained after order payment is made by using the funds sharing service as a payment mode; if an allocation instruction for target participating members of the funds sharing service is detected, performing funds allocation based on a quantity of members of the target participating members and a payment amount included in the payment information, to obtain funds shares of the target participating members; and performing deduction from balance amounts of the target participating members in the funds sharing service based on the funds shares.

One or more embodiments of this specification provide another funds processing device. The device includes a processor; and a storage configured to store computer-executable instructions, where when the computer-executable instructions are executed, the processor is enabled to perform the following operations: acquiring and displaying a member list of a funds sharing service, where the member list is displayed after payment information is obtained by performing order payment based on the funds sharing service; receiving an allocation instruction submitted for target participating members of the funds sharing service, to perform funds allocation based on a quantity of members of the target participating members and a payment amount included in the payment information; and receiving an allocation confirmation instruction submitted for funds shares of the target participating members obtained for funds allocation, to perform deduction from balance amounts of the target participating members in the funds sharing service based on the funds shares.

One or more embodiments of this specification provide a storage medium, configured to store computer-executable instructions, where when the computer-executable instructions are executed by a processor, the following procedure is implemented: acquiring payment information of a funds sharing service provisioned for a specific payment intention, where the payment information is obtained after order payment is made by using the funds sharing service as a payment mode; if an allocation instruction for target participating members of the funds sharing service is detected, performing funds allocation based on a quantity of members of the target participating members and a payment amount included in the payment information, to obtain funds shares of the target participating members; and performing deduction from balance amounts of the target participating members in the funds sharing service based on the funds shares.

One or more embodiments of this specification provide another storage medium, configured to store computer-executable instructions, where when the computer-executable instructions are executed by a processor, the following procedure is implemented: acquiring and displaying a member list of a funds sharing service, where the member list is displayed after payment information is obtained by performing order payment based on the funds sharing service; receiving an allocation instruction submitted for target participating members of the funds sharing service, to perform funds allocation based on a quantity of members of the target participating members and a payment amount included in the payment information; and receiving an allocation confirmation instruction submitted for funds shares of the target participating members obtained for funds allocation, to perform deduction from balance amounts of the target participating members in the funds sharing service based on the funds shares.

### BRIEF DESCRIPTION OF DRAWINGS

To describe the technical solutions in one or more embodiments of this specification more clearly, the following briefly describes the accompanying drawings needed for describing the embodiments. Clearly, the accompanying drawings in the following descriptions show merely some embodiments of this specification, and a person of ordinary skill in the art can still derive other drawings from these accompanying drawings without creative efforts.
FIG. 1 is a processing flowchart illustrating a funds processing method according to one or more embodiments of this specification;
FIG. 2 is a schematic diagram illustrating an interface selection page according to one or more embodiments of this specification;
FIG. 3 is a schematic diagram illustrating a service access page according to one or more embodiments of this specification;
FIG. 4 is a schematic diagram illustrating an amount collection page according to one or more embodiments of this specification;
FIG. 5 is a schematic diagram illustrating an identification code display page according to one or more embodiments of this specification;
FIG. 6 is a schematic diagram illustrating another amount collection page according to one or more embodiments of this specification;
FIG. 7 is a schematic diagram illustrating a payment confirmation page according to one or more embodiments of this specification;
FIG. 8 is a schematic diagram illustrating a strategy configuration page according to one or more embodiments of this specification;
FIG. 9 is a schematic diagram illustrating a page for displaying a payment mode list according to one or more embodiments of this specification;
FIG. 10 is a schematic diagram illustrating an allocation share display page according to one or more embodiments of this specification;
FIG. 11 is a schematic diagram illustrating a funds share display page according to one or more embodiments of this specification;
FIG. 12 is a schematic diagram illustrating a page for displaying a service bill list according to one or more embodiments of this specification;
FIG. 13 is a schematic diagram illustrating a member balance details page according to one or more embodiments of this specification;
FIG. 14 is a schematic diagram illustrating an interface selection page according to one or more embodiments of this specification;
FIG. 15 is a processing flowchart illustrating a funds processing method applied to a group funds management scenario according to one or more embodiments of this specification;
FIG. 16 is a processing flowchart illustrating another funds processing method according to one or more embodiments of this specification;
FIG. 17 is a schematic diagram illustrating a funds processing apparatus according to one or more embodiments of this specification;
FIG. 18 is a schematic diagram illustrating another funds processing apparatus according to one or more embodiments of this specification;
FIG. 19 is a schematic structural diagram illustrating a funds processing device according to one or more embodiments of this specification; and
FIG. 20 is a schematic structural diagram illustrating another funds processing device according to one or more embodiments of this specification.

### DETAILED DESCRIPTION OF EMBODIMENTS

To enable a person skilled in the art to better understand the technical solutions in the one or more embodiments of this specification, the following clearly and completely describes the technical solutions in the one or more embodiments of this specification with reference to the accompanying drawings in the one or more embodiments of this specification. Apparently, the described embodiments are only a part rather than all of the embodiments of this specification. Based on the one or more embodiments of this specification, all other embodiments obtained by a person of ordinary skill in the art without creative efforts shall fall within the protection scope of this specification.

Embodiment of a funds processing method provided in this specification: In the funds processing method provided in this embodiment, after a participating member of a funds sharing service performs payment processing by using the funds sharing service as a payment mode, the participating member may perform allocation based on a payment amount of the payment processing, to allocate the payment amount to participating members associated with the funds sharing service, thereby improving convenience of funds management of a group or a team. Specifically, after the payment processing is made by using the funds sharing service as a payment mode, funds allocation is performed based on an allocation instruction for the payment amount corresponding to the payment processing, to obtain funds shares of target participating members in the participating members associated with the funds sharing service, and deduction is performed from balance amounts of the target participating members in the funds sharing service based on the funds shares. In this way, validity of managing the balance amounts of the participating member in the funds sharing service is improved, and transparency and accuracy of managing the balance amounts of the participating members are achieved by managing the balance amount of each participating member, to avoid distrust of the participating members in a total funds amount in the funds sharing service. In addition, through the allocation, expenditures generated by the group or team are more transparently and accurately managed, and payment is made through funds in the funds sharing service, without the need for any member of the team to make advance payment, and a degree of awareness of participating members is improved.

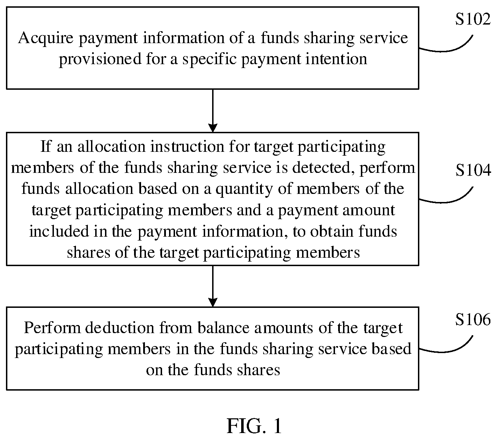

Referring to FIG. 1, the funds processing method provided in this embodiment specifically includes step S 102 to step S106.

Step S102: Acquire payment information of a funds sharing service provisioned for a specific payment intention.

In practice, for a collective behavior of a team, such as team building activities, a person in charge needs to collect expenses of each member, perform payment based on the collected expenses, and subsequently verify a flow direction of the expenses based on related vouchers such as payment vouchers. This leads to distrust of the member in the expenses. In addition, for projects that some members participate in but some members do not participate, all members need to bear the expenses, which affects the minds of the members that do not participate in a specific project to some extent.

Based on this, in this embodiment, a funds sharing service is created, so that a participating member is aware of transfer-in and transfer-out of funds corresponding to the funds sharing service and details of a flow direction. In addition, through the funds sharing service, a balance amount of each participating member is managed, and each member can view the expenses of other members in the funds sharing service to improve transparency of funds in the team or collective activities. Moreover, each expense can be allocated based on actual participating members, thereby further improving the minds of the members.

The funds sharing service includes a service that is jointly managed by all participating members associated with the funds sharing service to perform fund sharing, and each participating member may perform funds transfer-in and perform payment processing based on a total funds amount of the funds sharing service. In the funds sharing service, funds flow information of the funds sharing service is managed based on a plurality of users; and the funds sharing service can be configured with an automatic allocation function. Optionally, the funds sharing service is created by a creating member, and another user can be invited to participate in or be associated with the funds sharing service. The participating members that participate in the funds sharing service make funds admission to the funds sharing service or makes payment based on the total funds amount of the funds sharing service. The participating members transfer funds to the funds sharing service, and record an amount of transfer-in funds in the funds sharing service. Actual funds are transferred to a fund account of the creating member. In other words, "funds corresponding to the total funds amount of the funds sharing service are deposited in the fund account of the creating member" and/or "transfer information of the total funds amount is recorded in the funds sharing service". To ensure validity of the funds deposited in the fund account of the creating member, the creating member is prevented from making payment based on the funds of the funds sharing service in the fund account. The funds of the funds sharing service that are deposited in the fund account of the creating member have a permission mark, that is, need to be locked. The locked funds can only be used for payment in the resource sharing service. That is, the funds of the funds sharing service in the fund account of the creating member can only be used for payment by using the funds sharing service as a payment mode.

In addition, the funds sharing service can further be an electronic wallet that implements multi-user funds sharing. That is, the funds sharing service can further be replaced with a sharing wallet. Alternatively, the funds sharing service can further enable a sharing account to be created by the creating member, and optionally, the sharing account is an accounting account. Specifically, after the creating member creates the sharing account, and a user is invited to participate in the sharing account or is associated with the sharing account, a quantity of funds transferred by the participating user to the sharing account is recorded in the sharing account, and actual funds are transferred to the fund account of the creating member. Optionally, the payment information is obtained after order payment is made by using the funds sharing service as a payment mode.

Optionally, the funds sharing service corresponds to the accounting account and the fund account of the creating member. There is an association relationship between the accounting account and the fund account of the creating member of the accounting account. The association relationship is embodied in that funds corresponding to the total funds amount recorded in the accounting account are deposited in the fund account of the creating member. To prevent the creating member from spending funds corresponding to the total funds amount based on other payment modes, the funds corresponding to the total funds amount that are deposited in the fund account of the creating member are locked. The locked funds can be used only for payment processing that is based on the accounting account (that is, the funds sharing service). In addition, in order to improve a degree of awareness of each participating member about the funds flow information in the funds sharing service, all participating members in the funds sharing service have permission to view the funds flow information in the funds sharing service, and have permission to use the total funds amount in the funds sharing service.

Funds sharing means that all participating members that participate in the funds sharing service can perform funds transfer-in to and funds payment on the funds sharing service. In other words, the funds sharing service implements "joint funds transfer-in and funds payment by participating users".

The funds sharing service that is provisioned for a specific payment intention includes an account that is created by a creating user and that performs multi-user funds co-management, so that resources in the funds sharing service are consumed for a same intention or purpose. For example, in a group funds management scenario, it is expected that funds that are transferred by a participating member to the funds sharing service are used for common expenses generated by a group rather than an individual participating member. Through joint management of transactions in the funds sharing service by the participating members, the participating members need to make the payment of the group expenditure only based on the funds of the funds sharing service.

In specific implementation, after the user creates the funds sharing service, another user can be invited to participate in the funds sharing service, and a participating member of the funds sharing service (associated with the funds sharing service) can perform payment processing based on the total funds amount of the funds sharing service. In addition, in order to improve management effectiveness of the funds sharing service and avoid unfair management or unfair funds apportioning when one user manages the funds sharing service, a user can configure a management member of the funds sharing service after creating the funds sharing service. After the management member is configured, the creating member and the management member jointly manage the funds sharing service. In this way, through the management of the funds sharing service by at least two members, mutual supervision is implemented in a process of managing the funds sharing service, thereby further ensuring reliability of the total funds amount of the funds sharing service.

In an optional implementation provided in this embodiment, a funds sharing service is created and a management member is configured in the following manner: When it is detected that a user triggers a service interface (a predetermined interface) corresponding to the funds sharing service, the funds sharing service that uses the user as the creating member is generated. Optionally, the predetermined interface includes a trigger interface configured with a funds sharing service with an automatic allocation function. A user invited by the creating member is determined as a participating member of the funds sharing service. If a management member configuration instruction of the creating member is detected, a participating member corresponding to a member identifier included in the management member configuration instruction is determined as a management member of the funds sharing service.

Specifically, the funds sharing service associated with the user is generated based on a trigger instruction of the user for the multi-user funds sharing interface in the funds sharing service. If a confirmation instruction of a target user for an invitation prompt sent by the creating member (the user) is detected, the target user is determined as a participating member of the funds sharing service. If a management member configuration instruction of the creating member is detected, a participating member corresponding to a member identifier in the management member configuration instruction is determined as a management member of the funds sharing service. In a process of setting a management member by the creating member, to improve a degree of awareness of the management member, a preparatory management member can be determined as a management member of the funds sharing service after consent of the preparatory management member. There may be one or more management members.

Optionally, in a process of inviting the participating member by the creating member, the invitation prompt may include a generated authorization participating message link of the funds sharing service, or may include a service identifier of the funds sharing service, for example, a service identification code.

To improve a degree of awareness of a user in a process of creating the funds sharing service, inviting a target user, and configuring a management member, optionally, a process of creating the funds sharing service, inviting the target user, and configuring the management member can be further implemented based on cooperation between a server and a terminal device.

Specifically, after detecting an access request of the user for the funds sharing service, a first terminal device of the user displays an interface selection page that includes at least a multi-user funds sharing interface to the user, and if it is detected that the multi-user funds sharing interface configured on the interface selection page is triggered, submits a funds sharing service creation request to the server.

Based on the funds sharing service creation request submitted by the first terminal device, and the funds sharing service that uses a user corresponding to a first user identifier carried in the creation request as a creating member, the server sends a service access page of the funds sharing service to the first terminal device. Optionally, at least one service control is configured on the service access page. Corresponding service processing may be performed by triggering any service control. The first terminal device receives and displays the service access page, and if it is detected that a member invitation control configured in the service access page is triggered, submits a member invitation request to the server. The server acquires, based on the member invitation request, the target user and an invitation mode that are selected by the creating member; and generates invitation information corresponding to the invitation mode, and sends the invitation information to a second terminal device of the target user. Optionally, the invitation mode includes a link and/or an identification code. The second terminal device sends a participation confirmation request to the server based on a confirmation instruction of the target user for the invitation information. The server determines the target user as a participating member of the funds sharing service based on the participation confirmation request. Optionally, after being determined as a participating user of the funds sharing service, the target user can access the service access page. In addition, a user identifier image of the target user is displayed in a participating user display area of the service access page.

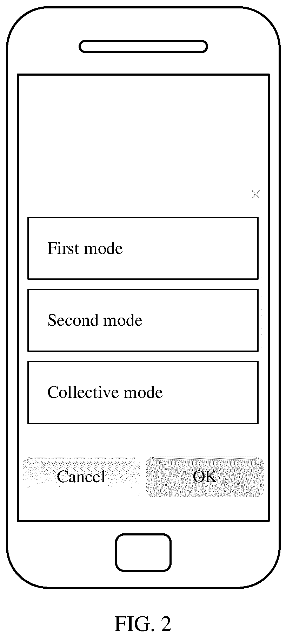

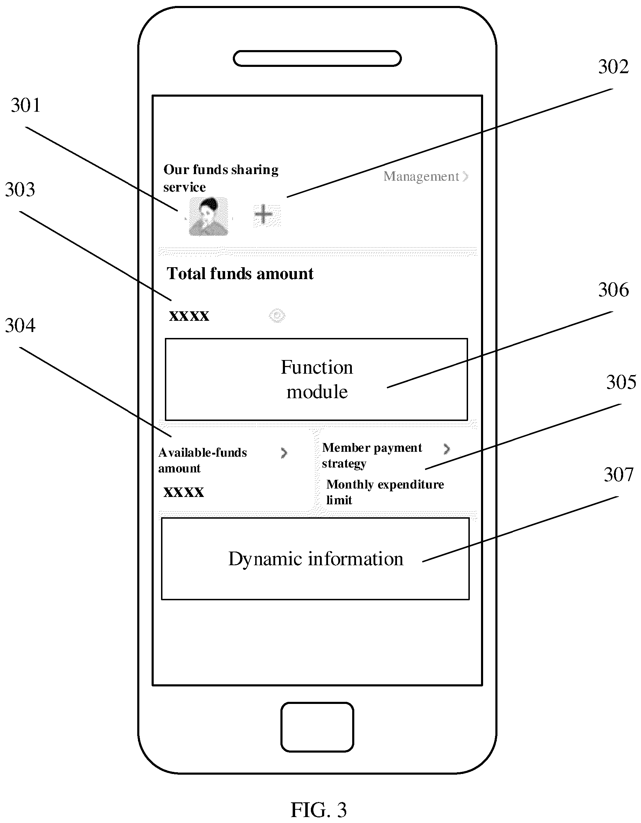

For example, a user u1 accesses a funds sharing service. After detecting that a terminal device of the user u1 accesses the funds sharing service, the terminal device displays an interface selection page shown in FIG. 2, and if it is detected that an interface in a collective mode configured on the interface selection page is triggered, submits a creation request for a funds sharing service in the collective mode to the server. The interface selection page is further configured with an interface in a first mode and an interface in a second mode. Specific content of the first mode and the second mode may be configured based on an actual scenario. Implementations are not limited in this embodiment. After receiving the creation request for the funds sharing service in the collective mode submitted by the terminal device of the user u1, the server generates the funds sharing service, and determines the user u1 as a creating member of the generated funds sharing service. To improve a degree of awareness of the user u1 about a creation result, a service access page shown in FIG. 3 is sent to the terminal device of the user u1. The service access page includes a participating user display area 301 where a member invitation control 302 is configured, a total funds amount display area 303, a balance amount display area 304, a member payment strategy display area 305, and a function module display area 306 where a collection control, a payment identifier access control, a funds transfer-in control, a funds transfer-out control, and a collection identifier access control can be displayed. In addition, a dynamic information display area 307 for the funds sharing service is further configured.

The terminal device of the user u1 displays the service access page. After detecting that the member invitation control 302 is triggered to send a member invitation request to the server, the server queries an associated user list of the user u1 based on the member invitation request, and sends the associated user list to the terminal device of the user u1 to acquire a user identifier, of an associated user selected by the user u1 from the associated user list, submitted by the terminal device of the user u1, or to acquire a user identifier (a communication identifier and/or an identifier) entered by the user u1 based on a display page for the associated user list and submitted by the terminal device of the user u1, and to acquire an invitation mode of identification code invitation submitted by the terminal device of the user u1. The server generates a service invitation identification code of the funds sharing service based on a service identifier of the funds sharing service and a member identifier of the creating member, and sends the service invitation identification code of the funds sharing service to a terminal device bound to the obtained user identifier. The server obtains a participation confirmation request submitted after the terminal device identifies a service identification code to view the service identifier and the member identifier, determines the user corresponding to the user identifier as a participating member of a funds sharing service, and updates, based on a user image identifier associated with the user identifier, the participating user display area on the service access page shown in FIG. 3.

It should be noted that the creating member, the management member, and the member that makes an invitation to participate in the funds sharing service are participating members of the funds sharing service. Participating members of the funds sharing service each can invite a user to participate in the funds sharing service and then become a participating member of the funds sharing service. To further improve management of the funds sharing service by the creating member and the management member, after any participating member invites a user to participate in the funds sharing service, the invited user is determined as a participating member of the funds sharing service after at least one of the creating member, the management member, and the invited user consents. Specifically, a confirmation sequence of the creating member, the management member, and the invited user may be configured based on an actual scenario. Implementations are not limited in this embodiment.

Optionally, a sum of balance amounts of participating members of the funds sharing service is the total funds amount of the funds sharing service. After the participating members perform funds transfer-in to the funds sharing service, the participating members transfer corresponding transfer-in funds to a fund account of a creating member of the funds sharing service and lock the fund account, and update, based on the transfer-in funds, the total funds amount and the balance amounts of the participating members that perform the funds transfer-in.

The service access page shown in FIG. 3 is configured with the function module display area 306 where the collection control, the payment identifier access control, the funds transfer-in control, a funds transfer-out control, and the collection identifier access control are displayed. Use processes of the function controls are individually described below. It should be noted that, in this embodiment, the controls displayed in the function module display area are merely exemplary, and other function controls can be configured, or one or more of the foregoing five function controls can be configured. Implementations are not limited in this embodiment.

### (1) Collection control

The collection control includes an identification code collection control. Optionally, the payment information includes payment information obtained after any participating member collects a collection identification code of a merchant by triggering the collection control and performs payment processing. Optionally, the payment information includes a payment amount. In addition, the payment information includes a member identifier of a participating member that triggers the collection control, an object of expenditure, and/or payee information.

Optionally, the acquiring payment information of a funds sharing service provisioned for a specific payment intention includes the following: if it is detected that the collection control corresponding to the funds sharing service is triggered, collecting and identifying the collection identification code of the merchant to obtain collection information of the merchant; and acquiring a collected payment amount in a payment confirmation instruction; transferring funds corresponding to the payment amount in the total funds amount of the funds sharing service in the fund account of the creating member of the funds sharing service to a collection account of the merchant, and determining a payment result as payment information; or acquiring a payment request obtained after the collection control is triggered to collect and identify the collection code of the merchant, and performing payment processing for the payment request based on the total funds amount of the funds sharing service to obtain payment information. Optionally, the collection control is configured on a service access page of a funds sharing service that is provisioned for a specific payment intention.

In addition, triggering the collection control of the funds sharing service to perform payment processing to obtain the payment information can further be performed based on cooperation between the server and the terminal device. In an optional implementation provided in this embodiment, the server performs the following operations: The server acquires a payment request submitted by a terminal device of any participating member of a funds sharing service. Optionally, the payment request is submitted after the terminal device detects that the collection control configured on the service access page of the funds sharing service is triggered, and collects and identifies the collection identification code of the merchant. The server performs payment processing based on the payment request to obtain a payment result.

Correspondingly, the terminal device of the any participating member of the funds sharing service performs the following operations: After it is detected that the participating member of the funds sharing service triggers the collection control configured on the service access page, the terminal device collects and identifies the collection identification code of the merchant, renders an amount collection page based on an identification result, and submits the payment request to the server after it is detected that the participating member submits the payment confirmation instruction. The payment request includes the collection information of the merchant and the payment amount. Alternatively, after it is detected that the participating member of the funds sharing service triggers the collection control configured on the service access page, the terminal device collects and identifies the collection identification code of the merchant, and submits the identification result to the server for payment processing. Optionally, the identification result includes the collection information of the merchant and the payment amount.

### (2) Payment identifier access control

The payment identifier access control includes a payment code access control. Optionally, the payment information includes payment information generated after any participating member accesses a payment code of the funds sharing service by triggering the payment code access control and shows the payment code, and a merchant terminal scans the payment code and performs payment processing.

In an optional implementation provided in this embodiment, the process of acquiring the payment information of the funds sharing service provisioned for a specific payment intention is implemented in the following manner: acquiring the payment information generated after the payment processing is performed based on the payment identification code of the funds sharing service.

In addition, the payment result obtained by performing the payment processing based on the payment code of the funds sharing service can further be implemented based on cooperation between the server and the terminal device. In an optional implementation provided in this embodiment, the server performs the following operations: The server acquires an access instruction, submitted by the terminal device of the participating member of the funds sharing service, for a payment identifier of the funds sharing service; reads the payment identifier of the funds sharing service based on the access instruction, and sends the payment identifier to the terminal device to perform payment processing; and receives payment information sent by a payment platform after the payment processing is performed based on the payment identifier. Optionally, the access instruction is submitted after the payment identifier access control configured on the service access page of the funds sharing service is triggered.

Correspondingly, the terminal device of the participating member of the funds sharing service performs the following operations: If it is detected that the participating member triggers the payment identifier access control configured on the service access page of the funds sharing service, the terminal device submits the access instruction for the payment identifier of the funds sharing service to the server; and receives and displays the payment identifier sent by the server.

### (3) Funds transfer-in control

In specific implementation, to ensure that a total funds amount exists in a collective funds sharing service so that payment processing is subsequently performed by using a funds sharing service as a payment mode, a participating member of the funds sharing service may trigger a control to access a funds transfer-in control configured on a control access page to perform funds transfer-in. In an optional implementation provided in this embodiment, if a funds transfer-in request of the participating member for the funds sharing service is detected, funds corresponding to a transfer-in funds amount in a fund account of the participating member are transferred to a fund account of a creating member of the funds sharing service, and locked. The total funds amount of the funds sharing service and a balance amount of the participating member are updated based on the transfer-in funds amount.

When the server and the terminal device cooperate in implementing funds transfer-in, in an optional implementation provided in this embodiment, the server performs the following operations: The server acquires funds transfer-in information sent after the payment platform performs funds transfer-in to the funds sharing service; and updates the total funds amount of the funds sharing service based on the transfer-in funds amount included in the funds transfer-in information, and updates the balance amount of the participating member corresponding to a member identifier included in the funds transfer-in information.

Correspondingly, the terminal device performs the following operations: The terminal device displays an amount collection page based on a trigger instruction from a participating member in the funds sharing service for the funds transfer-in and access control configured on the service access page; and if a transfer-in confirmation instruction submitted by the participating member based on the amount collection page is detected, invokes the payment platform to perform funds transfer-in.

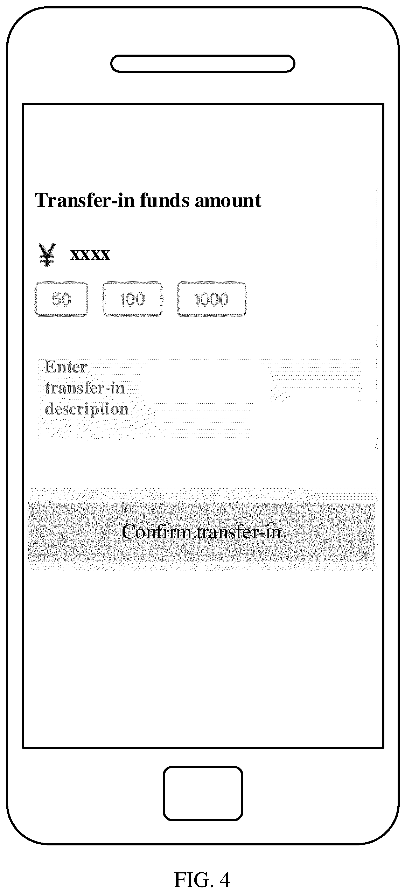

For example, after the funds transfer-in page configured on the service access page shown in FIG. 3 is triggered, an amount collection page shown in FIG. 4 is displayed to a participating member. The participating member can enter a transfer-in funds amount on the amount collection page. After it is detected that the participating member triggers a confirm transfer-in control configured in FIG. 4, the payment platform is invoked to perform funds transfer-in based on the transfer-in funds amount entered, and the payment platform sends the funds transfer-in information to the server after the funds transfer-in.

In addition, in order to improve convenience of entering transfer-in funds amounts by participating members, amount options can be configured, such as 50, 100, and 1000 shown in FIG. 4. After any amount option is triggered, an amount corresponding to the amount option is displayed in an entry area of the transfer-in amount. In addition, to improve a degree of awareness of other participating members about related content of this funds transfer-in, the participating members can further enter transfer-in description on the amount collection page shown in FIG. 4, to describe information such as a use range of the transfer-in funds.

### (4) Funds transfer-out control

In specific implementation, the participating members can further transfer funds corresponding to the total funds amount of the funds sharing service from the fund account of the creating member.

A process of funds transfer-out and a process of funds transfer-out are inverse, that is, the process of funds transfer-out is similar to related content of funds transfer-in. For details, references can be made to the related content of the funds transfer-out provided above. Details are omitted in this embodiment for simplicity.

### (5) Collection identifier access control

In specific implementation, funds transfer-in to the funds sharing service can be performed based on the collection identifier of the funds sharing service. For example, the participating members access and display the collection identifier of the funds sharing service so that the users can scan the collection identifier and perform funds transfer-in to the funds sharing service.

To improve a degree of awareness of each participating member in the funds sharing service about transfer-in information of the funds sharing service, in an optional implementation provided in this embodiment, in a process of performing funds transfer-in to the funds sharing service based on the collection identifier, the following operations are performed:

After funds transfer-in information that is based on the collection identifier of the funds sharing service is detected, key information in the funds transfer-in information is read; a funds transfer-in bill is generated based on the key information and a service bill list of the funds sharing service is updated; and dynamic information of the funds sharing service is updated based on the key information.

Specifically, the key information in the funds transfer-in information corresponding to the collection identifier of the funds sharing service is determined, and the service bill list and the dynamic information of the funds sharing service are updated based on the key information. Optionally, the key information includes a transfer-in user identifier, a member identifier of an access member of a collection identifier, a transfer-in amount, and/or identified collection channel information.

A user that transfers resources to the funds sharing service based on the collection identifier is not necessarily a participating member of the funds sharing service. Therefore, displaying identity information of the user in the funds sharing service affects privacy security of the user to a certain extent. Therefore, in a process of generating the funds transfer-in bill based on the key information, if a transfer-in user corresponding to the transfer-in user identifier is a participating user of the funds sharing service, the funds transfer-in bill is generated based on the key information. Correspondingly, updating the dynamic information of the funds sharing service based on the key information includes generating the dynamic information based on the key information and adding the dynamic information list to the funds sharing service.

Optionally, if the transfer-in user is not a participating user of the funds sharing service, that is, the transfer-in user identifier does not match a member identifier of the participating member of the funds sharing service, the transfer-in user identifier is desensitized to ensure privacy security of the transfer-in user. Correspondingly, generating the funds transfer-in bill based on the key information includes generating the funds transfer-in bill based on the desensitized user identifier and the member identifier of the access member of the collection identifier, the transfer-in amount, and/or the identified collection channel in the key information. Updating the dynamic information of the funds sharing service based on the key information includes generating the dynamic information based on the desensitized user identifier and the member identifier of the access member of the collection identifier, the transfer-in amount, and/or the identified collection channel in the key information and adding the dynamic information to the dynamic information list of the funds sharing service.

In an optional implementation provided in this embodiment, the server performs the following operations: The server acquires an access request, submitted by the terminal device of the participating member of the funds sharing service, for the collection identifier of the funds sharing service; and reads the collection identifier of the funds sharing service based on the access request, and sends the collection identifier to the terminal device.

Optionally, a collection funds amount submitted by the terminal device is received, and the collection funds amount is associated with the collection identifier.

Correspondingly, the terminal device of the participating member performs the following operations: If it is detected that the participating member of the funds sharing service triggers the collection identifier access control configured on the service access page of the funds sharing service, the terminal device submits the access request for the collection identifier of the access control to the server; and receives the collection identifier sent by the server, and renders and displays a collection identifier display page.

Optionally, if it is detected that a collection funds amount configuration control configured on the collection identifier display page is triggered, the amount collection page is displayed, and a collection funds amount entered by the participating member based on the amount collection page is acquired and submitted to the server.

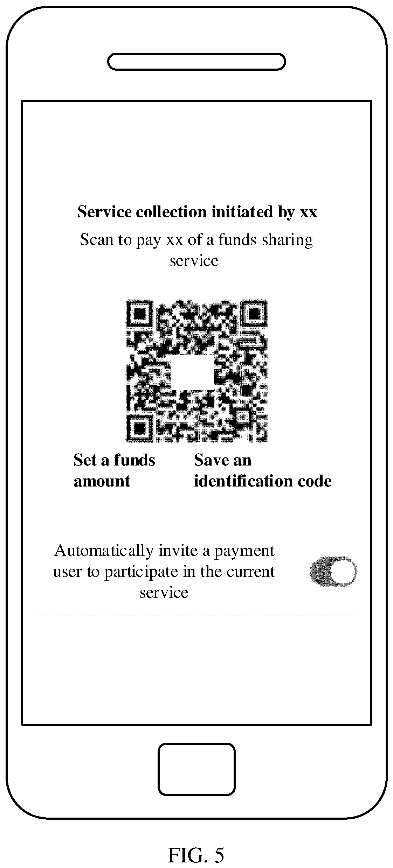

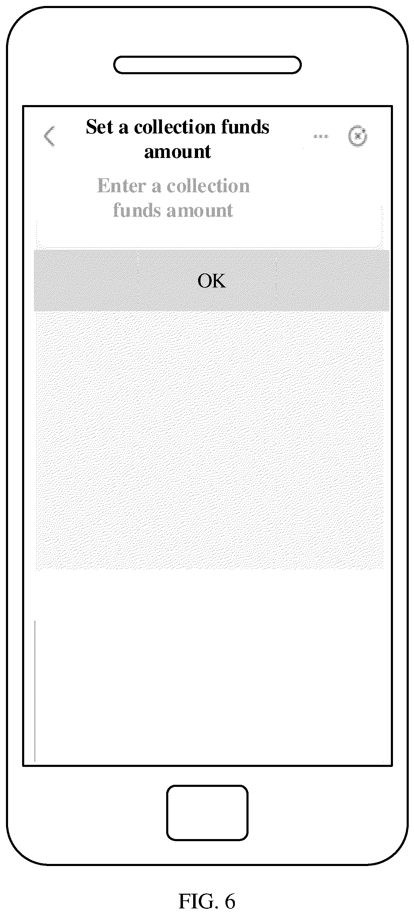

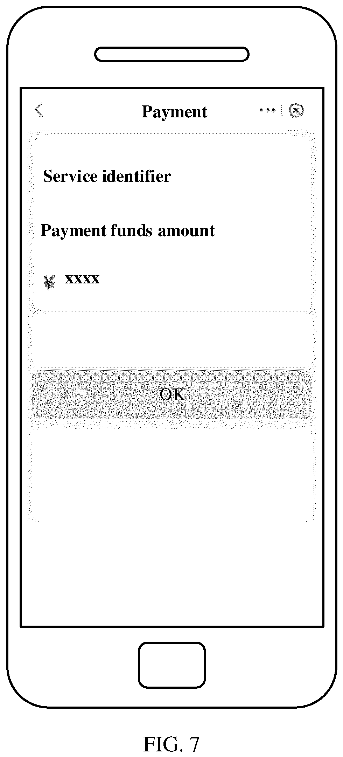

For example, any participating member of the funds sharing service triggers the collection identifier access control configured on the service access page shown in FIG. 3, and then submits an access request to the server for the collection identification code of the funds sharing service. The server queries the collection identification code of the funds sharing service and sends the collection identification code to the terminal device. The terminal device displays an identification code display page shown in FIG. 5. A "Set a funds amount" control and a "Save an identification code" control are configured on the identification code display page. If it is detected that the "Set a funds amount" control is triggered, an amount collection page shown in FIG. 6 is displayed. The participating member can enter a collection funds amount based on the amount collection page and submit the collection funds amount. The terminal device submits to the server the collection funds amount submitted by the user, and the server associates the collection funds amount with the collection identification code. If it is detected that the "Save an identification code" control is triggered, the terminal device downloads the collection identification code to a local location. After a target user uses a target terminal device to scan and identify a collection identification code displayed by the terminal device of the participating member, the target terminal device displays a payment confirmation page shown in FIG. 7, and displays the service identifier of the funds sharing service and a desensitized member identifier of a creating member. The target user may enter a payment funds amount based on the payment confirmation page and submit the payment funds amount. The payment platform or server transfers payment funds corresponding to a payment funds amount in a fund account of the target user to a fund account of the creating member based on the submitted payment funds amount. If the collection identification code is associated with the collection funds amount, the collection funds amount is rendered in the payment amount entry area when the payment confirmation page is displayed.

In addition, an invitation configuration interface is further configured on the identification code display page shown in FIG. 5. An automatic invitation service can be provisioned by triggering the invitation configuration interface. Specifically, the automatic invitation service is to send invitation information to the target user after the target user performs funds transfer-in to the funds sharing service based on the collection identifier, to determine the target user as a participating member of the funds sharing service after the target user performs confirmation.

In an optional implementation provided in this embodiment, after the target user performs funds transfer-in based on the collection identifier of the funds sharing service, the following operations are further performed: A participating invitation message for the funds sharing service is sent, to a user that the transfer-in user identifier belongs to, based on a member invitation tag configured based on the collection identifier; and if it is detected that the user submits a confirmation instruction for the participating invitation message, the user is determined as a participating member of the funds sharing service based on a participating confirmation instruction of a creating member and/or a management member of the funds sharing service.

Specifically, after the funds transfer-in information that is based on the collection identifier of the funds sharing service is detected, if no member invitation tag is configured for the collection identifier, no processing is needed. If a member invitation tag is configured for the collection identifier, participating invitation information of the funds sharing service is sent to the target user corresponding to the funds transfer-in information, and after the target user and the creating member or the management member of the funds sharing service submit the participating confirmation instruction of the target user, the target user is determined as a participating member of the funds sharing service. In addition, the participating invitation information of the funds sharing service is sent to the target user corresponding to the funds transfer-in information, and the target user is determined as a participating member of the funds sharing service based on the participating confirmation instruction of the target user.

The foregoing describes controls configured on the service access page. In an actual scenario, references can be made between functions implemented by the foregoing different function controls. Details are omitted in this embodiment for simplicity. In addition, to improve a degree of awareness about a specific payment intention of the funds sharing service, a participating member of the funds sharing service can set a service name of the funds sharing service as a service identifier.

The foregoing provides two modes of order payment: collecting the collection code of the merchant by triggering the collection control of the funds sharing service and then performing order payment by using the funds sharing service as a payment mode to obtain the payment information, and displaying the payment identifier of the funds sharing service and then performing order payment by using the funds sharing service as a payment mode to obtain the payment information. In addition to the foregoing two manners, in the process of order payment in another manner, for example, in the process of performing order payment by collecting the collection code of the merchant through a third-party service or displaying a payment identifier corresponding to the third-party service, the funds sharing service may be used as a candidate payment mode in a payment mode list. If it is detected that the funds sharing service in the payment mode list is selected, order payment is performed by using the funds sharing service as a payment mode.

In a specific execution process, when the funds sharing service is used as a candidate payment mode, to avoid a case that a participating member selects the funds sharing service as a payment mode but a total quantity of resources of the funds sharing service is not enough to perform order payment, the participating member needs to select a payment mode twice to affect the mind of the user. In this embodiment, in a process of generating a payment mode list including the funds sharing service, the following operations are performed: A funds sharing service set that a participating member corresponding to the payment information participates in is queried, and an available-funds amount of the participating member in each funds sharing service in the funds sharing service set is read; a payment tag of each funds sharing service is determined based on the available-funds amount of the participating member in the funds sharing service and the payment amount; and a payment mode list that includes a service identifier and the payment tag of the funds sharing service is generated.

Further, in an optional implementation provided in this embodiment of determining a payment tag of each funds sharing service based on the available-funds amount of the participating member in the funds sharing service and the payment amount, the payment tag of each funds sharing service is determined in the following manner: calculating a difference between the available-funds amount of the participating member in the funds sharing service and the payment amount; determining that a payment tag of a funds sharing service with the difference greater than or equal to a predetermined threshold is an available-funds amount of the participating member in the funds sharing service, and determining that a payment tag of a funds sharing service with the difference less than the predetermined threshold is a non-payment tag.

Optionally, in order to restrict a payment behavior of a participating member of the funds sharing service on funds of the funds sharing service, and avoid a large amount of expenditure of the participating member on the funds of the funds sharing service or too much expenditure of the user affects the mind of another member, an available-funds amount of the participating member is configured for the funds sharing service, and the available-funds amount is determined based on an available-funds strategy of the funds sharing service and an expenditure of the participating member for funds payment.

For example, if a creating member and a management member configure an expenditure limit of 3000 yuan for each participating member in the funds sharing service, the payment amount of the participating member needs to be less than 3000 yuan. If the expenditure limit of each participating member is set to 3000 yuan, the available-funds amount of each participating member is set to 3000 yuan. If any participating member pays 2000 yuan by using the funds sharing service as a payment mode, the available-funds amount of the participating member is 1000 yuan.

Optionally, the available-funds strategy is configured in the following manner: acquiring strategy configuration information submitted by a creating member or a management member of the funds sharing service, and sending, to the management member or the creating member, a strategy configuration prompt that includes the strategy configuration information; and if a confirmation instruction of the management member or the creating member for the strategy configuration prompt is detected, generating the available-funds strategy of the funds sharing service based on the strategy configuration information.

The creating member and the management member of the funds sharing service can jointly agree on the available-funds strategy of each participating member of the funds sharing service. The available-funds strategy includes a transfer-out permission, a consumption permission, and a periodic expenditure limit that are configured for each participating member. The transfer-out permission includes transferring funds of the funds sharing service to a fund account of a participating member; and the consumption permission includes performing order payment by the participating member based on the funds of the funds sharing service. The transfer-out permission and the consumption permission are expenditure permissions. Further, the common agreement between the creating member and the management member on the available-funds strategy of the funds sharing service can be initiated by one party and confirmed by the other party before the agreement takes effect.

In order to implement hierarchical management on the funds sharing service, available-funds strategies can be individually configured for the creating member, the management member, and other participating members.

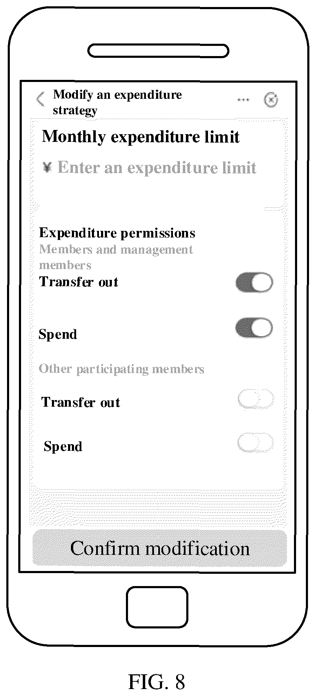

In a strategy configuration page shown in FIG. 8, a monthly expenditure limit (total amount of transfer-out and consumption) can be entered, transfer-out and consumption permissions of the member and the management member can be configured, and transfer-out and consumption permissions of other participating members are disabled.

Specifically, a funds sharing service query request of the payment platform for any participating member is obtained. A funds sharing service set formed by a funds sharing service associated with a member identifier of the any participating member is queried, and for any funds sharing service in the funds sharing service set, a difference between an available-funds amount of the any participating member in the any funds sharing service and a payment amount included in the funds sharing service query request is calculated. If the difference is greater than or equal to 0, the available-funds amount of the any participating member in the any funds sharing service is determined as a payment tag of the any funds sharing service; or if the difference is less than 0, it is determined that the payment tag of the any funds sharing service is a non-payment tag.

After a payment tag of each funds sharing service in the funds sharing service set for the payment amount is determined, a service identifier and the payment tag of each funds sharing service are sent to the payment platform, to generate, on the payment platform, a payment mode list that includes the service identifier and the payment tag of each funds sharing service.

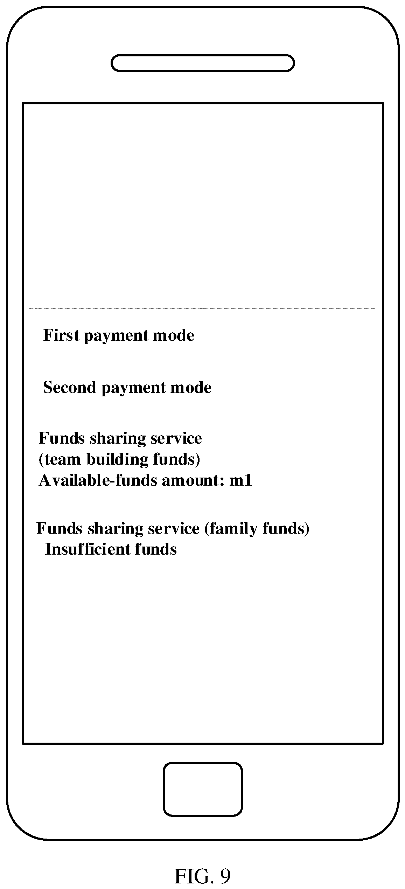

For example, a participating member participates in two funds sharing services: a funds sharing service having a team building intention as a payment intention and having a service name of team building funds, and a funds sharing service having a family dinner intention as a payment intention and having a service name of family funds. An available-funds amount of the participating member in the team building funds is m1, and an available-funds amount of the participating member in the family funds is m2 (m1>m2). A payment amount of the payment of the participating member is m (m1>m>m2). Therefore, a payment tag of the family funds for the payment amount is a non-payment tag, and a payment tag of the team building funds for the payment amount is m1. The family funds and the non-available tag, the team building funds, and m1 are sent to the payment platform, to generate a payment mode list display page shown in FIG. 9 and display the page by using a terminal device of the participating member.

If the participating member selects the funds sharing service as the payment mode for order payment, the payment platform transfers, based on the payment amount, funds corresponding to the payment amount in a fund account of a creating member of the funds sharing service to a corresponding collection account, and generates payment information and sends the information to the server. Alternatively, if the participating member selects the funds sharing service as the payment mode for order payment, funds corresponding to the payment amount in a fund account of a creating member of the funds sharing service are transferred to a corresponding collection account based on the payment amount, and payment information is generated.

It should be noted that, optionally, a balance amount of each participating member in the funds sharing service is determined based on a transfer-in amount of the participating member to the funds sharing service and funds shares for funds allocation. For example, if a transfer-in amount of a participating member to the funds sharing service is 1000 yuan, and a funds share of the participating member is 200 yuan after funds allocation, a balance amount of the participating member is 1000-200=800 yuan.

In addition, the available-funds strategy may not be configured. When no available-funds strategy is configured for the creating member and the management member, the payment mode list is determined in the following manner: querying a funds sharing service set that a participating member corresponding to the payment information participates in, and reading a total funds amount of each funds sharing service in the funds sharing service set; and determining a payment tag of each funds sharing service based on the total funds amount of each funds sharing service and the payment amount, and generating the payment mode list that includes the service identifier and the payment tag of each funds sharing service.

Further, in the process of determining the payment tag of each funds sharing service based on the total funds amount of each funds sharing service and the payment amount, a difference between the total funds amount of each funds sharing service and the payment amount is calculated; it is determined that a payment tag of a funds sharing service with the difference greater than or equal to a predetermined threshold is the total funds amount of the funds sharing service; and it is determined that a payment tag of a funds sharing service with the difference less than the predetermined threshold is a non-payment tag.

In specific implementation, after the payment information of the funds sharing service that is provisioned for the specific payment intention is acquired, because the funds sharing service has an automatic allocation function, in an optional implementation provided in this embodiment, after the payment information is acquired, the following operations are performed: Funds allocation shares are calculated based on the quantity of members of the participating members of the funds sharing service and the payment amount; and deduction is performed from balance amounts of the participating members in the funds sharing service based on the funds allocation shares, and an allocation share list of the payment amount is generated based on the funds allocation shares and member identifiers of the participating members.

Specifically, after the payment information is acquired, automatic allocation processing is performed on the payment amount included in the payment information, to obtain a funds allocation share of the participating member of the funds sharing service for the payment amount, and generate the allocation share list of the payment amount. In the process of performing automatic allocation processing, a quotient of the payment amount and the quantity of members of the participating members of the funds sharing service is calculated, to obtain funds allocation shares of the participating members to the payment amount.

Optionally, the allocation share list and the payment amount are sent to a terminal device of a participating member that initiates the order payment, to generate an allocation share display page and display the page. Further, after obtaining an allocation request for the payment amount that is submitted by the terminal device of the participating member that initiates the order payment, the terminal device can further send the allocation share list and the payment amount to the terminal device, to generate the allocation share display page and display the page.

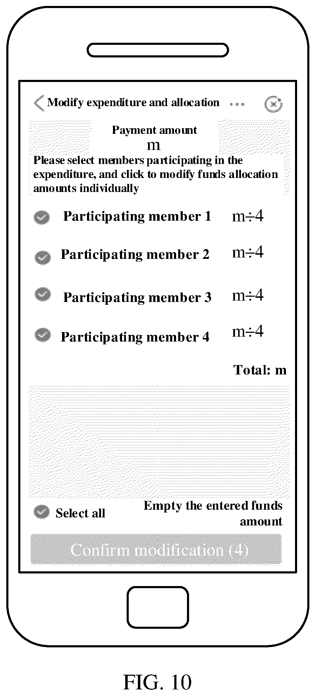

For example, the payment amount is m, and the quantity of members of the participating members of the funds sharing service is 4, the funds allocation share of each participating member is calculated as m÷4, the allocation share list of the payment amount is generated based on the funds allocation share and a member identifier of the participating member, and an allocation share display page shown in FIG. 10 is generated based on the allocation share list and the payment amount. To avoid skipping editing the allocation share list before submitting an allocation confirmation instruction, when the allocation share list does not change, an allocation confirmation control configured on the allocation share display page cannot be triggered.

In addition, step S102 can further be replaced with acquiring payment information of a funds sharing service provisioned for a specific payment intention, and this step forms a new implementation together with other processing steps provided in this embodiment.

Step S104: If an allocation instruction for target participating members of the funds sharing service is detected, perform funds allocation based on a quantity of members of the target participating members and a payment amount included in the payment information, to obtain funds shares of the target participating members.

The allocation instruction includes an editing instruction from a user for a participating member participating in payment amount allocation processing. The allocation instruction includes a member identifier of a target participating member obtained after editing that performs allocation processing on a payment amount.

In specific implementation, the participating member that initiates the order payment may edit a participating member that participates in the payment amount allocation processing. The allocation share list obtained after the automatic allocation processing can be edited, and an allocation instruction is submitted after editing.

Optionally, the terminal device of the participating member that initiates the order payment displays an allocation share display page. If it is detected that target participating members in the allocation share display page are edited, an allocation instruction that includes the payment amount and member identifiers of the target participating members is submitted to the server, to perform funds allocation based on the quantity of members of the target participating members and the payment amount. The server performs funds allocation based on the quantity of members of the target participating members and the payment amount, to obtain funds shares of the target participating members.

In an optional implementation provided in this embodiment, performing funds allocation based on the quantity of members corresponding to member identifiers that are included in the allocation instruction and the payment amount, to obtain the funds shares of the target participating members includes calculating allocation shares based on the payment amount and the quantity of members; and determining the allocation shares as the funds shares of the target participating members.

Specifically, the server calculates the funds shares of the target participating members based on the payment amount and the quantity of members of the target participating members. Optionally, the funds shares of the target participating members are sent to the terminal device of the participating member that initiates the order payment, to display a funds share display page.

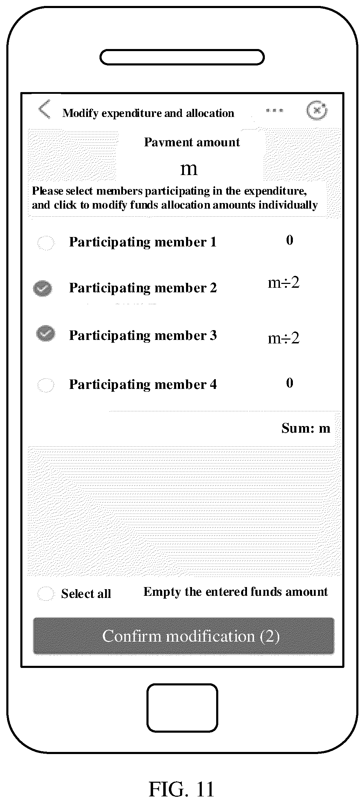

Still using the foregoing example, all participating members in the allocation share list in the allocation share display page shown in FIG. 10 participate in payment amount allocation, and therefore, all participating members are selected. If the terminal device of the participating member 3 that initiates the order payment detects that the participating member cancels the selection of the participating member 1 and the participating member 4, an allocation instruction that includes the payment amount, the member identifier of the participating member 2, and the member identifier of the participating member 3 is sent to the server. The server calculates funds shares of the participating member 2 and the participating member 3 based on the payment amount and a quantity of members, that is, 2, of the target participating members, and the funds shares are m÷2. Further, the server can send m÷2 to the terminal device. After receiving m÷2, the terminal device updates the allocation share display page to a funds share display page shown in FIG. 11.

After detecting that the allocation control configured on the funds share display page is triggered, the terminal device submits an allocation confirmation instruction to the server, to perform deduction from balance amounts of the target participating members in the funds sharing service based on the funds shares.

In addition, step S104 can further be replaced with the following step: If an allocation instruction for a member factor in an allocation factor of the funds sharing service is detected, funds allocation is performed based on the quantity of members corresponding to the member identifiers in the allocation instruction and the payment amount to obtain a funds share of each target participating member, and this step forms a new implementation together with other processing steps provided in this embodiment. Optionally, the allocation factor includes a member factor and a funds factor. If a target participating member is edited, the member factor changes. If a funds share of the target participating member is edited, the funds factor changes.

Further, in an optional implementation provided in this embodiment, if configuration information for an allocation instruction for a member factor in an allocation factor of the funds sharing service and configuration information for a funds factor are detected, deduction is performed from a funds share of a target participating member corresponding to the allocation instruction in the configuration information in the funds sharing service is deducted based on the funds share of the target participating member.

Optionally, if a payment participation instruction for a member factor in a payment factor of the funds sharing service is obtained, and configuration information for a funds factor in the payment factor is obtained, deduction is performed from a balance amount of the payment participating member in the funds sharing service based on a funds share of the payment participating member corresponding to the payment participation instruction in the configuration information.

Specifically, funds allocation may be performed by editing only a target participating member, or funds allocation may be performed by editing only a funds share (a customized amount), or funds allocation may be performed by editing a target participating member and a funds share.

Step S106: Perform deduction from balance amounts of the target participating members in the funds sharing service based on the funds shares.

A balance amount of each participating member in the funds sharing service is determined based on a transfer-in amount of the participating member to the funds sharing service and funds shares for funds allocation.

In specific implementation, based on an allocation instruction for target participating members of the funds sharing service, funds allocation is performed based on a quantity of members of the target participating members and a payment amount included in the payment information, to obtain funds shares of the target participating members, and then deduction is performed from balance amounts of the target participating members in the funds sharing service based on the funds shares.

Optionally, after the payment information is acquired, a payment bill of the funds sharing service is generated based on the payment information. Correspondingly, after the deduction is performed from the balance amounts of the target participating members in the funds sharing service based on the funds shares, an allocation result of the payment bill is generated based on the funds shares of the target participating members, and is associated with the payment bill. A service bill list of the funds sharing service is updated based on the payment bill and the allocation result.

To ensure a degree of awareness of participating members of the funds sharing service about a funds flow generated by the funds sharing service, the participating members can view the payment bill of the funds sharing service. To improve a degree of awareness of a participating member about an allocation result of the payment bill in the process of viewing the payment bill, in an optional implementation provided in this embodiment, a bill keyword of the payment bill is displayed when a service bill list of the funds sharing service is displayed to a participating user. Specifically, the bill keyword is determined in the following manner: generating bill keywords of the target participating members for the payment bill based on the allocation result of the target participating members for the payment amount; or generating a bill keyword of a participating member other than the target participating members in the participating members of the funds sharing service for the payment bill based on the allocation result of the payment amount.

Specifically, for a payment bill, a bill keyword of a target participating member participating in payment amount allocation corresponding to the payment bill is generated, and a bill keyword, for the payment bill, of another participating member that does not participate in the corresponding payment amount allocation is generated.

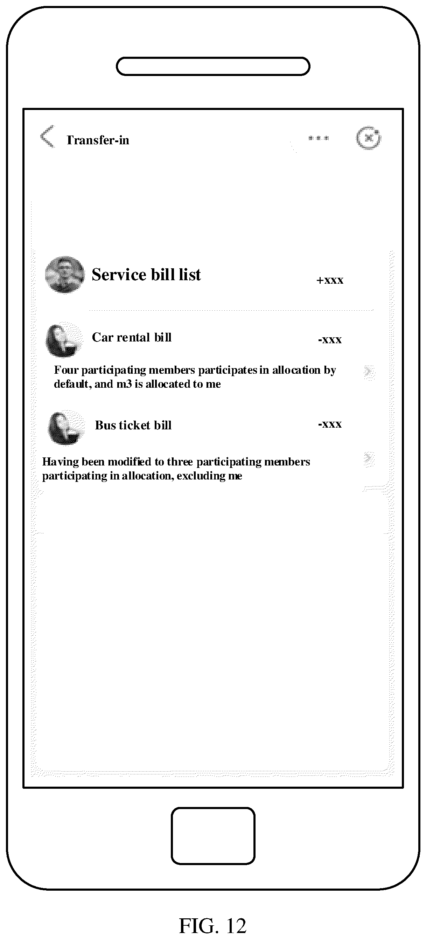

For example, a payment bill of the funds sharing service includes a funds transfer-in bill, a car rental bill, and a bus ticket bill. If a participating member that participates in payment amount allocation corresponding to the car rental bill but does not participate in payment amount allocation corresponding to the bus ticket bill queries a service bill of the funds sharing service, a service bill list display page shown in FIG. 12 is displayed to the participating user. "Four participating members participates in allocation by default, and m3 is allocated to me" is a bill keyword of the participating member for the car rental bill; "Having been modified to three participating members participating in allocation, excluding me" is a bill keyword of the participating member for the bus ticket bill.

As described above, all participating members have access to the payment bill of the funds sharing service. In addition, the participating members have access to the balance amounts of all the participating members. To ensure that the balance amounts of the participating members are updated in a timely manner, after deduction is performed from the balance amounts of the target participating members in the funds sharing service based on the funds shares, the following operations are further performed: Balance statuses of the target participating members in the funds sharing service are determined based on balance amounts of the target participating member obtained after the deduction; and a member funds list of the funds sharing service is updated based on the balance amounts and the balance statuses of the target participating members after the deduction.

Specifically, if the balance amounts of the target participating members after the deduction is less than 0, it is determined that the balance statuses of the target participating members for the funds sharing service are a first state (an arrears state). If the balance amounts of the target participating members after the deduction is greater than or equal to 0, it is determined that the balance statuses of the target participating members for the funds sharing service are a balance state. The member funds list of the funds sharing service is updated based on the balance amounts and the balance statuses of the target participating members after the deduction.

The member funds list includes the balance amounts and balance statuses of the participating members of the funds sharing service.

Optionally, if it is detected that an access request for member funds of the funds sharing service is submitted by a terminal device of a participating member, a member funds list and a total funds amount of the funds sharing service are read and sent to the terminal device, to render and display a member balance details page based on the member funds list and the total funds amount.

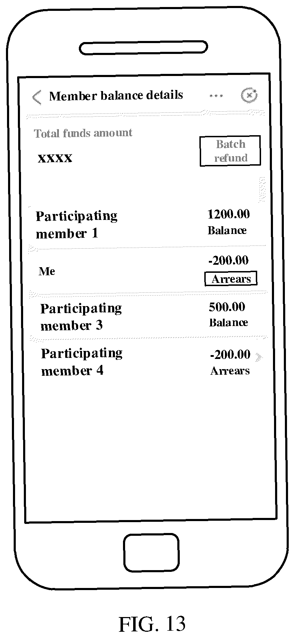

For example, the participating member 2 submits, by using the terminal device, an access request for member funds of the funds sharing service, and the terminal device submits the access request to the server. The server reads, based on the access request, the member funds list and the total funds amount of the funds sharing service, and sends the member funds list and the total funds amount to the terminal device. The terminal device renders and displays a member balance details page shown in FIG. 13 based on the member funds list and the total funds amount.

Still using FIG. 13 as an example, because a balance amount of the participating member 2 is less than 0, the participating member 2 needs to perform funds recharging. It ensures proper apportioning when funds apportioning is performed on the participating members in the balance state.

In an optional implementation provided in this embodiment, a participating member with a balance status being the arrears state performs recharging in the following manner: if a recharging instruction for a balance amount from any participating member having a balance status being a first state is detected, transferring funds corresponding to a transfer-in amount in a member account of the any participating member to a fund account of a creating member of the funds sharing service and locking the fund account; updating a balance amount of the any participating member and a total funds amount of the funds sharing service based on the transfer-in amount; and updating the member funds list based on the balance amount, the total funds amount, and the balance status corresponding to the balance amount.

Specifically, recharging processing is performed based on a recharging instruction of a participating member with a balance status being the first state, a balance amount of the participating member and a total funds amount of the funds sharing service are updated based on a recharging result, and the member funds list of the funds sharing service is updated.

In the member balance details page shown in FIG. 13, the participating member 2 triggers a configured recharging control and performs recharging for arrears of 200 yuan. When the participating member 2 transfers 200 yuan to the funds sharing service, the balance amount of the participating member 2 is updated to 0 and the total funds amount is increased by 200 yuan.

A participating member having arrears performs recharging. In addition, a batch refund can be made by the creating member or the management member for a participating member having a balance. Specifically, if the creating member or the management member accesses the member balance details page, a batch refund control is configured on the member balance details page; or if other participating members access the member balance details page, the batch refund control is not configured.

The creating member or the management member can trigger the batch refund control to perform apportioning processing of the total funds amount of the funds sharing service. In an optional implementation provided in this embodiment, the apportioning processing is performed in the following manner: if an apportioning instruction for a total funds amount of the funds sharing service is detected, acquiring an apportioning member identifier included and apportioning configuration information of an apportioning funds amount; and transferring apportioning funds corresponding to the apportioning funds amount in a fund account of a creating member of the funds sharing service to a member account of an apportioning member corresponding to the apportioning member identifier.

Optionally, an apportioning instruction submitted by a terminal device of the creating member or the management member for the total funds amount of the funds sharing service is acquired; and apportioning processing is performed based on the apportioning instruction, and a balance amount of an apportioning member and the total funds amount of the funds sharing service are updated based on an apportioning result.

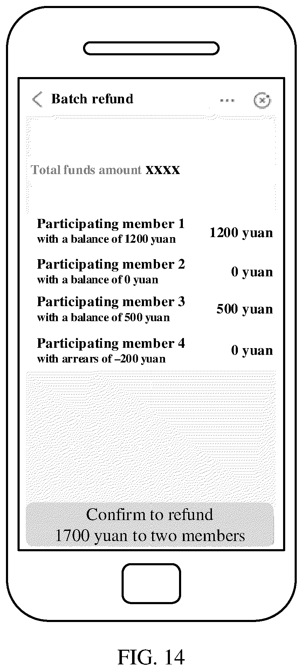

For example, if the creating member detects that the creating member triggers the batch refund control configured on the member balance details page, a jump is made to apportioning information collection page shown in FIG. 14 to collect apportioning configuration information. After it is detected that a confirmation control configured on the apportioning information collection page is triggered, apportioning configuration information entered based on the apportioning information collection page is acquired, and an apportioning instruction is submitted to the server based on the apportioning configuration information so that the server performs apportioning processing.

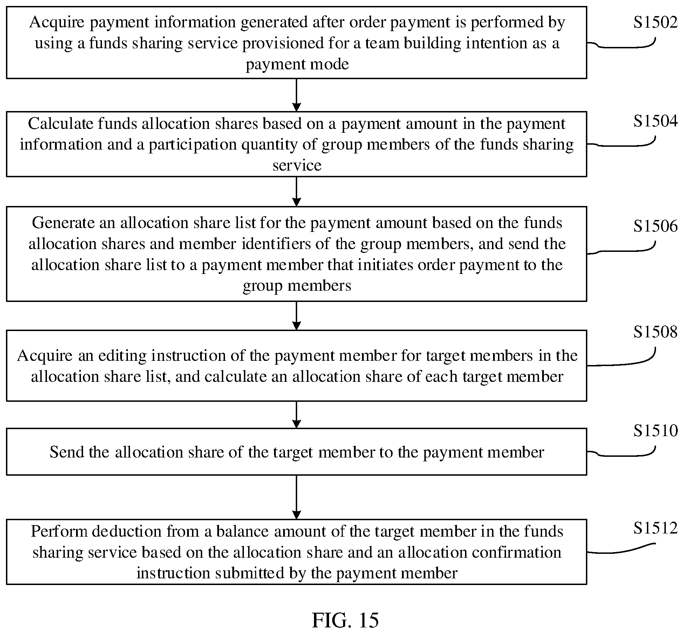

The funds processing method provided in this embodiment is further described below by using an example in which the funds processing method provided in this embodiment is applied to a group funds management scenario. Referring to FIG. 15, the funds processing method applied to the group funds management scenario specifically includes step S1502 to step S1512.

Step S1502: Acquire payment information generated after order payment is performed by using a funds sharing service provisioned for a team building intention as a payment mode.

Step S1504: Calculate funds allocation shares based on a payment amount in the payment information and a participation quantity of group members of the funds sharing service.

Step S1506: Generate an allocation share list for the payment amount based on the funds allocation shares and member identifiers of the group members, and send the allocation share list to a payment member that initiates order payment to the group members.

Step S1508: Acquire an editing instruction of the payment member for target members in the allocation share list, and calculate an allocation share of each target member.

The group members include target members and payment members. The target members can also include payment members.

Step S1510: Send the allocation share of the target member to the payment member.

Step S1512: Perform deduction from a balance amount of the target member in the funds sharing service based on the allocation share and an allocation confirmation instruction submitted by the payment member.

Another embodiment of a funds processing method provided in this specification: A specific implementation process of the funds processing method provided in this embodiment is similar to related content of the funds processing method provided in the foregoing embodiment. During reading of this embodiment, references can be made to related content of the funds processing method provided in the foregoing embodiment.

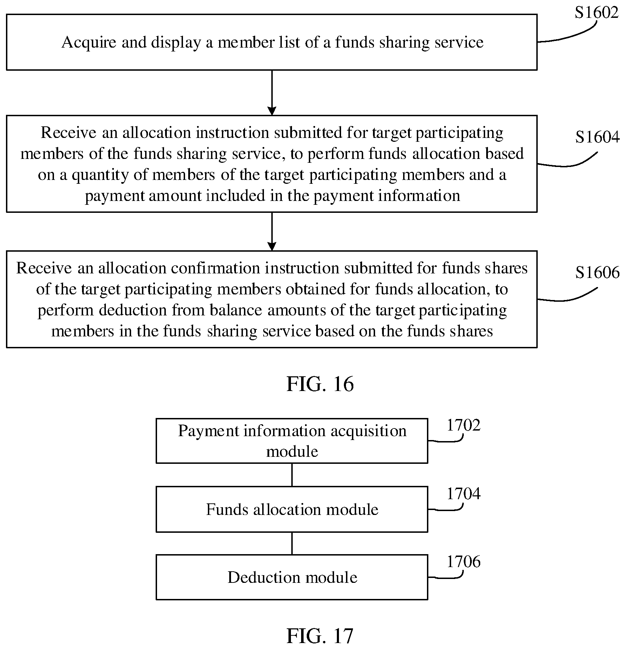

Referring to FIG. 16, the funds processing method provided in this embodiment specifically includes step S1602 to step S1606.

Step S1602: Acquire and display a member list of a funds sharing service.

The funds processing method provided in this embodiment is applied to a terminal device. Specifically, the terminal device includes a terminal device of a participating member that performs order payment based on a funds sharing service.

Optionally, the member list is displayed after payment information is obtained by performing order payment based on the funds sharing service.

The funds sharing service includes a service that is jointly managed by all participating members associated with the funds sharing service to perform fund sharing, and each participating member may perform funds transfer-in and perform payment processing based on a total funds amount of the funds sharing service. In the funds sharing service, funds flow information of the funds sharing service is managed based on a plurality of users; and the funds sharing service can be configured with an automatic allocation function. Optionally, the funds sharing service is created by a creating member, and another user can be invited to participate in or be associated with the funds sharing service. The participating members that participate in the funds sharing service make funds admission to the funds sharing service or makes payment based on the total funds amount of the funds sharing service. The participating members transfer funds to the funds sharing service, and record an amount of transfer-in funds in the funds sharing service. Actual funds are transferred to a fund account of the creating member. In other words, "funds corresponding to the total funds amount of the funds sharing service are deposited in the fund account of the creating member" and/or "transfer information of the total funds amount is recorded in the funds sharing service". To ensure validity of the funds deposited in the fund account of the creating member, the creating member is prevented from making payment based on the funds of the funds sharing service in the fund account. The funds of the funds sharing service that are deposited in the fund account of the creating member have a permission mark. The locked funds can only be used for payment in the resource sharing service. That is, the funds of the funds sharing service in the fund account of the creating member can only be used for payment by using the funds sharing service as a payment mode.

In addition, the funds sharing service can further be an electronic wallet that implements multi-user funds sharing. That is, the funds sharing service can further be replaced with a sharing wallet. Alternatively, the funds sharing service can further enable a sharing account to be created by the creating member, and optionally, the sharing account is an accounting account. Specifically, after the creating member creates the sharing account, and a user is invited to participate in the sharing account or is associated with the sharing account, a quantity of funds transferred by the participating user to the sharing account is recorded in the sharing account, and actual funds are transferred to the fund account of the creating member.

Optionally, the funds sharing service corresponds to the accounting account and the fund account of the creating member. There is an association relationship between the accounting account and the fund account of the creating member of the accounting account. The association relationship is embodied in that funds corresponding to the total funds amount recorded in the accounting account are deposited in the fund account of the creating member. To prevent the creating member from spending funds corresponding to the total funds amount based on other payment modes, the funds corresponding to the total funds amount that are deposited in the fund account of the creating member are locked. The locked funds can be used only for payment processing that is based on the accounting account (that is, the funds sharing service). In addition, in order to improve a degree of awareness of each participating member about the funds flow information in the funds sharing service, all participating members in the funds sharing service have permission to view the funds flow information in the funds sharing service, and have permission to use the total funds amount in the funds sharing service.

Funds sharing means that all participating members that participate in the funds sharing service can perform funds transfer-in to and funds payment on the funds sharing service. In other words, the funds sharing service implements "joint funds transfer-in and funds payment by participating users".

In specific implementation, after the user creates the funds sharing service, another user can be invited to participate in the funds sharing service, and a participating member of the funds sharing service (associated with the funds sharing service) can perform payment processing based on the total funds amount of the funds sharing service. In addition, in order to improve management effectiveness of the funds sharing service and avoid unfair management or unfair funds apportioning when one user manages the funds sharing service, a user can configure a management member of the funds sharing service after creating the funds sharing service. After the management member is configured, the creating member and the management member jointly manage the funds sharing service. In this way, through the management of the funds sharing service by at least two members, mutual supervision is implemented in a process of managing the funds sharing service, thereby further ensuring reliability of the total funds amount of the funds sharing service.

In this embodiment, a funds sharing service is created and a management member is configured in the following manner: When it is detected that a user triggers a multi-user funds sharing interface of the funds sharing service, the funds sharing service that uses the user as the creating member is generated. A user invited by the creating member is determined as a participating member of the funds sharing service. If a management member configuration instruction of the creating member is detected, a participating member corresponding to a member identifier included in the management member configuration instruction is determined as a management member of the funds sharing service.

Specifically, the funds sharing service associated with the user is generated based on a trigger instruction of the user for the multi-user funds sharing interface in the funds sharing service. If a confirmation instruction of a target user for an invitation prompt sent by the creating member (the user) is detected, the target user is determined as a participating member of the funds sharing service. If a management member configuration instruction of the creating member is detected, a participating member corresponding to a member identifier in the management member configuration instruction is determined as a management member of the funds sharing service.

Optionally, in a process of inviting the participating member by the creating member, the invitation prompt may include a generated authorization participating message link of the funds sharing service, or may include a service identifier of the funds sharing service, for example, a service identification code.

It should be noted that in a process of setting a management member by the creating member, to improve a degree of awareness of the management member, a preparatory management member can be determined as a management member of the funds sharing service after consent of the preparatory management member.

To improve a degree of awareness of a user in a process of creating the funds sharing service, inviting a target user, and configuring a management member, optionally, a process of creating the funds sharing service, inviting the target user, and configuring the management member can be further implemented based on cooperation between a server and a terminal device.

Specifically, after detecting an access request of the user for the funds sharing service, a first terminal device of the user displays an interface selection page that includes at least a multi-user funds sharing interface to the user, and if it is detected that the multi-user funds sharing interface configured on the interface selection page is triggered, submits a funds sharing service creation request to the server. Based on the funds sharing service creation request submitted by the first terminal device, and the funds sharing service that uses a user corresponding to a first user identifier carried in the creation request as a creating member, the server sends a service access page of the funds sharing service to the first terminal device. Optionally, at least one service control is configured on the service access page. Corresponding service processing may be performed by triggering any service control. The first terminal device receives and displays the service access page, and if it is detected that a member invitation control configured in the service access page is triggered, submits a member invitation request to the server. The server acquires, based on the member invitation request, the target user and an invitation mode that are selected by the creating member; and generates invitation information corresponding to the invitation mode, and sends the invitation information to a second terminal device of the target user. Optionally, the invitation mode includes a link and/or an identification code. The second terminal device sends a participation confirmation request to the server based on a confirmation instruction of the target user for the invitation information. The server determines the target user as a participating member of the funds sharing service based on the participation confirmation request. Optionally, after being determined as a participating user of the funds sharing service, the target user can access the service access page. In addition, a user identifier image of the target user is displayed in a participating user display area of the service access page.

For example, a user u1 accesses a funds sharing service. After detecting that a terminal device of the user u1 accesses the funds sharing service, the terminal device displays an interface selection page shown in FIG. 2, and if it is detected that an interface in a collective mode configured on the interface selection page is triggered, submits a creation request for a funds sharing service in the collective mode to the server. The interface selection page is further configured with an interface in a first mode and an interface in a second mode. Specific content of the first mode and the second mode may be configured based on an actual scenario. Implementations are not limited in this embodiment. After receiving the creation request for the funds sharing service in the collective mode submitted by the terminal device of the user u1, the server generates the funds sharing service, and determines the user u1 as a creating member of the generated funds sharing service. To improve a degree of awareness of the user u1 about a creation result, a service access page shown in FIG. 3 is sent to the terminal device of the user u1. The service access page includes a participating user display area 301 where a member invitation control 302 is configured, a total funds amount display area 303, a balance amount display area 304, a member payment strategy display area 305, and a function module display area 306 where a collection control, a payment identifier access control, a funds transfer-in control, a funds transfer-out control, and a collection identifier access control are displayed. In addition, a dynamic information display area 307 for the funds sharing service is further configured.

The terminal device of the user u1 displays the service access page. After detecting that the member invitation control 302 is triggered to send a member invitation request to the server, the server queries an associated user list of the user u1 based on the member invitation request, and sends the associated user list to the terminal device of the user u1 to acquire a user identifier, of an associated user selected by the user u1 from the associated user list, submitted by the terminal device of the user u1, or to acquire a user identifier (a communication identifier and/or an identifier) entered by the user u1 based on a display page for the associated user list and submitted by the terminal device of the user u1, and to acquire an invitation mode of identification code invitation submitted by the terminal device of the user u1. The server generates a service invitation identification code of the funds sharing service based on a service identifier of the funds sharing service and a member identifier of the creating member, and sends the service invitation identification code of the funds sharing service to a terminal device bound to the obtained user identifier. The server obtains a participation confirmation request submitted after the terminal device identifies a service identification code to view the service identifier and the member identifier, determines the user corresponding to the user identifier as a participating member of a funds sharing service, and updates, based on a user image identifier associated with the user identifier, the participating user display area on the service access page shown in FIG. 3.

It should be noted that the creating member, the management member, and the member that makes an invitation to participate in the funds sharing service are participating members of the funds sharing service. Participating members of the funds sharing service each can invite a user to participate in the funds sharing service and then become a participating member of the funds sharing service. To further improve management of the funds sharing service by the creating member and the management member, after any participating member invites a user to participate in the funds sharing service, the invited user is determined as a participating member of the funds sharing service after at least one of the creating member, the management member, and the invited user consents. Specifically, a confirmation sequence of the creating member, the management member, and the invited user may be configured based on an actual scenario. Implementations are not limited in this embodiment. Optionally, a sum of balance amounts of participating members of the funds sharing service is the total funds amount of the funds sharing service. After the participating members perform funds transfer-in to the funds sharing service, the participating members transfer corresponding transfer-in funds to a fund account of a creating member of the funds sharing service and lock the fund account, and update, based on the transfer-in funds, the total funds amount and the balance amounts of the participating members that perform the funds transfer-in.

The service access page shown in FIG. 3 is configured with the function module display area 306 where the collection control, the payment identifier access control, the funds transfer-in control, a funds transfer-out control, and the collection identifier access control are displayed. Use processes of the function controls are individually described below. It should be noted that, in this embodiment, the controls displayed in the function module display area are merely exemplary, and other function controls can be configured, or one or more of the foregoing five function controls can be configured. Implementations are not limited in this embodiment.

In specific implementation, after acquiring the payment information of the funds sharing service that is provisioned for the specific payment intention, the server sends the member list of the funds sharing service to a terminal device of a participating member that performs order payment. The terminal device acquires and displays the member list of the funds sharing service.

First, the collection control includes an identification code collection control. Optionally, the payment information includes payment information obtained after any participating member collects a collection identification code of a merchant by triggering the collection control and performs payment processing. Optionally, the payment information includes a payment amount. In addition, the payment information includes a member identifier of a participating member that triggers the collection control, an object of expenditure, and/or payee information.

Optionally, the server acquires payment information of a funds sharing service provisioned for a specific payment intention, including the following: if it is detected that the collection control corresponding to the funds sharing service is triggered, collecting and identifying the collection identification code of the merchant to obtain collection information of the merchant; and acquiring a collected payment amount in a payment confirmation instruction; transferring funds corresponding to the payment amount in the total funds amount of the funds sharing service in the fund account of the creating member of the funds sharing service to a collection account of the merchant, and determining a payment result as payment information; or acquiring a payment request obtained after the collection control is triggered to collect and identify the collection code of the merchant, and performing payment processing for the payment request based on the total funds amount of the funds sharing service to obtain payment information.

In addition, triggering the collection control of the funds sharing service to perform payment processing to obtain the payment information can further be performed based on cooperation between the server and the terminal device. In an optional implementation provided in this embodiment, the server performs the following operations: The server acquires a payment request submitted by a terminal device of any participating member of a funds sharing service. Optionally, the payment request is submitted after the terminal device detects that the collection control configured on the service access page of the funds sharing service is triggered, and collects and identifies the collection identification code of the merchant. The server performs payment processing based on the payment request to obtain a payment result.

Correspondingly, the terminal device of the any participating member of the funds sharing service performs the following operations: After it is detected that the participating member of the funds sharing service triggers the collection control configured on the service access page, the terminal device collects and identifies the collection identification code of the merchant, renders an amount collection page based on an identification result, and submits the payment request to the server after it is detected that the participating member submits the payment confirmation instruction. The payment request includes the collection information of the merchant and the payment amount. Alternatively, after it is detected that the participating member of the funds sharing service triggers the collection control configured on the service access page, the terminal device collects and identifies the collection identification code of the merchant, and submits the identification result to the server for payment processing. Optionally, the identification result includes the collection information of the merchant and the payment amount.

Second, the payment identifier access control includes a payment code access control. Optionally, the payment information includes payment information generated after any participating member accesses a payment code of the funds sharing service by triggering the payment code access control and shows the payment code, and a merchant terminal scans the payment code and performs payment processing.

In this embodiment, the process in which the server acquires the payment information of the funds sharing service provisioned for a specific payment intention is implemented in the following manner: acquiring the payment information generated after the payment processing is performed based on the payment identification code of the funds sharing service.

In addition, the payment result obtained by performing the payment processing based on the payment code of the funds sharing service can further be implemented based on cooperation between the server and the terminal device. In an optional implementation provided in this embodiment, the server performs the following operations: The server acquires an access instruction, submitted by the terminal device of the participating member of the funds sharing service, for a payment identifier of the funds sharing service; reads the payment identifier of the funds sharing service based on the access instruction, and sends the payment identifier to the terminal device to perform payment processing; and receives payment information sent by a payment platform after the payment processing is performed based on the payment identifier. Optionally, the access instruction is submitted after the payment identifier access control configured on the service access page of the funds sharing service is triggered.

Correspondingly, the terminal device of the participating member of the funds sharing service performs the following operations: If it is detected that the participating member triggers the payment identifier access control configured on the service access page of the funds sharing service, the terminal device submits the access instruction for the payment identifier of the funds sharing service to the server; and receives and displays the payment identifier sent by the server.

Third, the funds transfer-in control. In specific implementation, to ensure that a total funds amount exists in a collective funds sharing service so that payment processing is subsequently performed by using a funds sharing service as a payment mode, a participating member of the funds sharing service may trigger a control to access a funds transfer-in control configured on a control access page to perform funds transfer-in. In an optional implementation provided in this embodiment, if a funds transfer-in request of the participating member for the funds sharing service is detected, funds corresponding to a transfer-in funds amount in a fund account of the participating member are transferred to a fund account of a creating member of the funds sharing service, and locked. The total funds amount of the funds sharing service and a balance amount of the participating member are updated based on the transfer-in funds amount.

When the server and the terminal device cooperate in implementing funds transfer-in, in an optional implementation provided in this embodiment, the server performs the following operations: The server acquires funds transfer-in information sent after the payment platform performs funds transfer-in to the funds sharing service; and updates the total funds amount of the funds sharing service based on the transfer-in funds amount included in the funds transfer-in information, and updates the balance amount of the participating member corresponding to a member identifier included in the funds transfer-in information.

Correspondingly, the terminal device performs the following operations: The terminal device displays an amount collection page based on a trigger instruction from a participating member in the funds sharing service for the funds transfer-in and access control configured on the service access page; and if a transfer-in confirmation instruction submitted by the participating member based on the amount collection page is detected, invokes the payment platform to perform funds transfer-in.

For example, after the funds transfer-in page configured on the service access page shown in FIG. 3 is triggered, an amount collection page shown in FIG. 4 is displayed to a participating member. The participating member can enter a transfer-in funds amount on the amount collection page. After it is detected that the participating member triggers a confirm transfer-in control configured in FIG. 4, the payment platform is invoked to perform funds transfer-in based on the transfer-in funds amount entered, and the payment platform sends the funds transfer-in information to the server after the funds transfer-in.

In addition, in order to improve convenience of entering transfer-in funds amounts by participating members, amount options can be configured, such as 50, 100, and 1000 shown in FIG. 4. After any amount option is triggered, an amount corresponding to the amount option is displayed in an entry area of the transfer-in amount. In addition, to improve a degree of awareness of other participating members about related content of this funds transfer-in, the participating members can further enter transfer-in description on the amount collection page shown in FIG. 4, to describe information such as a use range of the transfer-in funds.

Fourth, the funds transfer-out control. In specific implementation, the participating members can further transfer funds corresponding to the total funds amount of the funds sharing service from the fund account of the creating member.

A process of funds transfer-out and a process of funds transfer-out are inverse, that is, the process of funds transfer-out is similar to related content of funds transfer-in. For details, references can be made to the related content of the funds transfer-out provided above. Details are omitted in this embodiment for simplicity.

Fifth, the collection identifier access control. In specific implementation, funds transfer-in to the funds sharing service can be performed based on the collection identifier of the funds sharing service. For example, the participating members access and display the collection identifier of the funds sharing service so that the users can scan the collection identifier and perform funds transfer-in to the funds sharing service.

To improve a degree of awareness of each participating member in the funds sharing service about transfer-in information of the funds sharing service, in an optional implementation provided in this embodiment, in a process of performing funds transfer-in to the funds sharing service based on the collection identifier, the following operations are performed: After funds transfer-in information that is based on the collection identifier of the funds sharing service is detected, key information in the funds transfer-in information is extracted; a funds transfer-in bill is generated based on the key information and a service bill list of the funds sharing service is updated; and dynamic information of the funds sharing service is updated based on the key information.

Specifically, the key information in the funds transfer-in information corresponding to the collection identifier of the funds sharing service is determined, and the service bill list and the dynamic information of the funds sharing service are updated based on the key information. Optionally, the key information includes a transfer-in user identifier, a member identifier of an access member of a collection identifier, a transfer-in amount, and/or identified collection channel information.

A user that transfers resources to the funds sharing service based on the collection identifier is not necessarily a participating member of the funds sharing service. Therefore, displaying identity information of the user in the funds sharing service affects privacy of the user to a certain extent. Therefore, in a process of generating the funds transfer-in bill based on the key information, if a transfer-in user corresponding to the transfer-in user identifier is a participating user of the funds sharing service, the funds transfer-in bill is generated based on the key information. Correspondingly, updating the dynamic information of the funds sharing service based on the key information includes generating the dynamic information based on the key information and adding the dynamic information list to the funds sharing service.

Optionally, if the transfer-in user is not a participating user of the funds sharing service, that is, the transfer-in user identifier does not match a member identifier of the participating member of the funds sharing service, the transfer-in user identifier is desensitized to ensure privacy security of the transfer-in user. Correspondingly, generating the funds transfer-in bill based on the key information includes generating the funds transfer-in bill based on the desensitized user identifier and the member identifier of the access member of the collection identifier, the transfer-in amount, and/or the identified collection channel in the key information. Updating the dynamic information of the funds sharing service based on the key information includes generating the dynamic information based on the desensitized user identifier and the member identifier of the access member of the collection identifier, the transfer-in amount, and/or the identified collection channel in the key information and adding the dynamic information to the dynamic information list of the funds sharing service.

In an optional implementation provided in this embodiment, the server performs the following operations: The server acquires an access request, submitted by the terminal device of the participating member of the funds sharing service, for the collection identifier of the funds sharing service; and reads the collection identifier of the funds sharing service based on the access request, and sends the collection identifier to the terminal device. Optionally, a collection funds amount submitted by the terminal device is received, and the collection funds amount is associated with the collection identifier.

Correspondingly, the terminal device of the participating member performs the following operations: If it is detected that the participating member of the funds sharing service triggers the collection identifier access control configured on the service access page of the funds sharing service, the terminal device submits the access request for the collection identifier of the access control to the server; and receives the collection identifier sent by the server, and renders and displays a collection identifier display page.

Optionally, if it is detected that a collection funds amount configuration control configured on the collection identifier display page is triggered, the amount collection page is displayed, and a collection funds amount entered by the participating member based on the amount collection page is acquired and submitted to the server.

For example, any participating member of the funds sharing service triggers the collection identifier access control configured on the service access page shown in FIG. 3, and then submits an access request to the server for the collection identification code of the funds sharing service. The server queries the collection identification code of the funds sharing service and sends the collection identification code to the terminal device. The terminal device displays an identification code display page shown in FIG. 5. A "Set a funds amount" control and a "Save an identification code" control are configured on the identification code display page. If it is detected that the "Set a funds amount" control is triggered, an amount collection page shown in FIG. 6 is displayed. The participating member can enter a collection funds amount based on the amount collection page and submit the collection funds amount. The terminal device submits to the server the collection funds amount submitted by the user, and the server associates the collection funds amount with the collection identification code. If it is detected that the "Save an identification code" control is triggered, the terminal device downloads the collection identification code to a local location. After a target user uses a target terminal device to scan and identify a collection identification code displayed by the terminal device of the participating member, the target terminal device displays a payment confirmation page shown in FIG. 7, and displays the service identifier of the funds sharing service and a desensitized member identifier of a creating member. The target user may enter a payment funds amount based on the payment confirmation page and submit the payment funds amount. The payment platform or server transfers payment funds corresponding to a payment funds amount in a fund account of the target user to a fund account of the creating member based on the submitted payment funds amount. If the collection identification code is associated with the collection funds amount, the collection funds amount is rendered in the payment amount entry area when the payment confirmation page is displayed.

In addition, an invitation configuration interface is further configured on the identification code display page shown in FIG. 5. An automatic invitation service can be provisioned by triggering the invitation configuration interface. Specifically, the automatic invitation service is to send invitation information to the target user after the target user performs funds transfer-in to the funds sharing service based on the collection identifier, to determine the target user as a participating member of the funds sharing service after the target user performs confirmation.

In an optional implementation provided in this embodiment, after the target user performs funds transfer-in based on the collection identifier of the funds sharing service, the following operations are further performed: A participating invitation message for the funds sharing service is sent, to a user that the transfer-in user identifier belongs to, based on a member invitation tag configured based on the collection identifier; and if it is detected that the user submits a confirmation instruction for the participating invitation message, the user is determined as a participating member of the funds sharing service based on a participating confirmation instruction of a creating member and/or a management member of the funds sharing service.

Specifically, after the funds transfer-in information that is based on the collection identifier of the funds sharing service is detected, if no member invitation tag is configured for the collection identifier, no processing is needed. If a member invitation tag is configured for the collection identifier, participating invitation information of the funds sharing service is sent to the target user corresponding to the funds transfer-in information, and after the target user and the creating member or the management member of the funds sharing service submit the participating confirmation instruction of the target user, the target user is determined as a participating member of the funds sharing service. In addition, the participating invitation information of the funds sharing service is sent to the target user corresponding to the funds transfer-in information, and the target user is determined as a participating member of the funds sharing service based on the participating confirmation instruction of the target user.

The foregoing describes controls configured on the service access page. In an actual scenario, references can be made between functions implemented by the foregoing different function controls. Details are omitted in this embodiment for simplicity. In addition, to improve a degree of awareness about a specific payment intention of the funds sharing service, a participating member of the funds sharing service can set a service name of the funds sharing service as a service identifier.

The foregoing provides two modes of order payment: collecting the collection code of the merchant by triggering the collection control of the funds sharing service and then performing order payment by using the funds sharing service as a payment mode to obtain the payment information, and displaying the payment identifier of the funds sharing service and then performing order payment by using the funds sharing service as a payment mode to obtain the payment information. In addition to the foregoing two manners, in the process of order payment in another manner, for example, in the process of performing order payment by collecting the collection code of the merchant through a third-party service or displaying a payment identifier corresponding to the third-party service, the funds sharing service may be used as a candidate payment mode in a payment mode list. If it is detected that the funds sharing service in the payment mode list is selected, order payment is performed by using the funds sharing service as a payment mode.

In a specific execution process, when the funds sharing service is used as a candidate payment mode, to avoid a case that a participating member selects the funds sharing service as a payment mode but a total quantity of resources of the funds sharing service is not enough to perform order payment, the participating member needs to select a payment mode twice to affect the mind of the user. In this embodiment, in a process of generating a payment mode list including the funds sharing service, the following operations are performed: A funds sharing service set that a participating member corresponding to the payment information participates in is queried, and an available-funds amount of the participating member in each funds sharing service in the funds sharing service set is read; a payment tag of each funds sharing service is determined based on the available-funds amount of the participating member in the funds sharing service and the payment amount; and a payment mode list that includes a service identifier and the payment tag of the funds sharing service is generated.

Further, in an optional implementation provided in this embodiment of determining a payment tag of each funds sharing service based on the available-funds amount of the participating member in the funds sharing service and the payment amount, the payment tag of each funds sharing service is determined in the following manner: calculating a difference between the available-funds amount of the participating member in the funds sharing service and the payment amount; determining that a payment tag of a funds sharing service with the difference greater than or equal to a predetermined threshold is an available-funds amount of the participating member in the funds sharing service, and determining that a payment tag of a funds sharing service with the difference less than the predetermined threshold is a non-payment tag.

Optionally, in order to restrict a payment behavior of a participating member of the funds sharing service on funds of the funds sharing service, and avoid a large amount of expenditure of the participating member on the funds of the funds sharing service or too much expenditure of the user affects the mind of another member, an available-funds amount of the participating member is configured for the funds sharing service, and the available-funds amount is determined based on an available-funds strategy of the funds sharing service and an expenditure of the participating member for funds payment.

For example, if a creating member and a management member configure an expenditure limit of 3000 yuan for each participating member in the funds sharing service, the payment amount of the participating member needs to be less than 3000 yuan. If the expenditure limit of each participating member is set to 3000 yuan, the available-funds amount of each participating member is set to 3000 yuan. If any participating member pays 2000 yuan by using the funds sharing service as a payment mode, the available-funds amount of the participating member is 1000 yuan.

Optionally, the available-funds strategy is configured in the following manner: acquiring strategy configuration information submitted by a creating member or a management member of the funds sharing service, and sending, to the management member or the creating member, a strategy configuration prompt that includes the strategy configuration information; and if a confirmation instruction of the management member or the creating member for the strategy configuration prompt is detected, generating the available-funds strategy of the funds sharing service based on the strategy configuration information.

The creating member and the management member of the funds sharing service can jointly agree on the available-funds strategy of each participating member of the funds sharing service. The available-funds strategy includes a transfer-out permission, a consumption permission, and a periodic expenditure limit that are configured for each participating member. The transfer-out permission includes transferring funds of the funds sharing service to a fund account of a participating member; and the consumption permission includes performing order payment by the participating member based on the funds of the funds sharing service. Further, the common agreement between the creating member and the management member on the available-funds strategy of the funds sharing service can be initiated by one party and confirmed by the other party before the agreement takes effect.

In order to implement hierarchical management on the funds sharing service, available-funds strategies can be individually configured for the creating member, the management member, and other participating members.

In a strategy configuration page shown in FIG. 8, a monthly expenditure limit (total amount of transfer-out and consumption) can be entered, transfer-out and consumption permissions of the member and the management member can be configured, and transfer-out and consumption permissions of other participating members are disabled.

Specifically, a funds sharing service query request of the payment platform for any participating member is obtained. A funds sharing service set formed by a funds sharing service associated with a member identifier of the any participating member is queried, and for any funds sharing service in the funds sharing service set, a difference between an available-funds amount of the any participating member in the any funds sharing service and a payment amount included in the funds sharing service query request is calculated. If the difference is greater than or equal to 0, the available-funds amount of the any participating member in the any funds sharing service is determined as a payment tag of the any funds sharing service; or if the difference is less than 0, it is determined that the payment tag of the any funds sharing service is a non-payment tag.

After a payment tag of each funds sharing service in the funds sharing service set for the payment amount is determined, a service identifier and the payment tag of each funds sharing service are sent to the payment platform, to generate, on the payment platform, a payment mode list that includes the service identifier and the payment tag of each funds sharing service.

For example, a participating member participates in two funds sharing services: a funds sharing service having a team building intention as a payment intention and having a service name of team building funds, and a funds sharing service having a family dinner intention as a payment intention and having a service name of family funds. An available-funds amount of the participating member in the team building funds is m1, and an available-funds amount of the participating member in the family funds is m2 (m1>m2). A payment amount of the payment of the participating member is m (m1>m>m2). Therefore, a payment tag of the family funds for the payment amount is a non-payment tag, and a payment tag of the team building funds for the payment amount is m1. The family funds and the non-available tag, the team building funds, and m1 are sent to the payment platform, to generate a payment mode list display page shown in FIG. 9 and display the page by using a terminal device of the participating member.

If the participating member selects the funds sharing service as the payment mode for order payment, the payment platform transfers, based on the payment amount, funds corresponding to the payment amount in a fund account of a creating member of the funds sharing service to a corresponding collection account, and generates payment information and sends the information to the server. Alternatively, if the participating member selects the funds sharing service as the payment mode for order payment, funds corresponding to the payment amount in a fund account of a creating member of the funds sharing service are transferred to a corresponding collection account based on the payment amount, and payment information is generated.

It should be noted that, optionally, a balance amount of each participating member in the funds sharing service is determined based on a transfer-in amount of the participating member to the funds sharing service and funds shares for funds allocation. For example, if a transfer-in amount of a participating member to the funds sharing service is 1000 yuan, and a funds share of the participating member is 200 yuan after funds allocation, a balance amount of the participating member is 1000-200=800 yuan.

In addition, the available-funds strategy may not be configured. When no available-funds strategy is configured for the creating member and the management member, the payment mode list is determined in the following manner: querying a funds sharing service set that a participating member corresponding to the payment information participates in, and reading a total funds amount of each funds sharing service in the funds sharing service set; and determining a payment tag of each funds sharing service based on the total funds amount of each funds sharing service and the payment amount, and generating the payment mode list that includes the service identifier and the payment tag of each funds sharing service.

Further, in the process of determining the payment tag of each funds sharing service based on the total funds amount of each funds sharing service and the payment amount, a difference between the total funds amount of each funds sharing service and the payment amount is calculated; it is determined that a payment tag of a funds sharing service with the difference greater than or equal to a predetermined threshold is the total funds amount of the funds sharing service; and it is determined that a payment tag of a funds sharing service with the difference less than the predetermined threshold is a non-payment tag.

In specific implementation, after the payment information of the funds sharing service that is provisioned for the specific payment intention is acquired, because the funds sharing service has an automatic allocation function, in an optional implementation provided in this embodiment, after acquiring the payment information, the server performs the following operations: Funds allocation shares are calculated based on the quantity of members of the participating members of the funds sharing service and the payment amount; and deduction is performed from balance amounts of the participating members in the funds sharing service based on the funds allocation shares, and an allocation share list of the payment amount is generated based on the funds allocation shares and member identifiers of the participating members.

Specifically, after the payment information is acquired, automatic allocation processing is performed on the payment amount included in the payment information, to obtain a funds allocation share of the participating member of the funds sharing service for the payment amount, and generate the allocation share list of the payment amount. In the process of performing automatic allocation processing, a quotient of the payment amount and the quantity of members of the participating members of the funds sharing service is calculated, to obtain funds allocation shares of the participating members to the payment amount.

Optionally, the allocation share list and the payment amount are sent to a terminal device of a participating member that initiates the order payment, to generate an allocation share display page and display the page. Further, after obtaining an allocation request for the payment amount that is submitted by the terminal device of the participating member that initiates the order payment, the terminal device can further send the allocation share list and the payment amount to the terminal device, to generate the allocation share display page and display the page.

For example, the payment amount is m, and the quantity of members of the participating members of the funds sharing service is 4, the funds allocation share of each participating member is calculated as m÷4, the allocation share list of the payment amount is generated based on the funds allocation share and a member identifier of the participating member, and an allocation share display page shown in FIG. 10 is generated based on the allocation share list and the payment amount. To avoid skipping editing the allocation share list before submitting an allocation confirmation instruction, when the allocation share list does not change, an allocation confirmation control configured on the allocation share display page cannot be triggered.

Optionally, the acquiring and displaying a member list of a funds sharing service includes the following: The terminal device sends an allocation request to the server based on an allocation instruction for allocating a payment amount to a participating member. The server reads the member list of the participating members of the funds sharing service based on the allocation request, and sends the member list to the terminal device. The terminal device acquires and displays the member list. Alternatively, the terminal device acquires and displays the member list of the funds sharing service that is read and sent by the server after the server acquires the payment information generated after the order payment is performed by using the funds sharing service as a payment mode.

In addition, step S1602 can further be replaced with acquiring and displaying the allocation share list of the funds sharing service, and this step forms a new implementation together with other processing steps provided in this embodiment. Optionally, the acquiring and displaying the allocation share list of the funds sharing service includes the following: The terminal device sends an allocation request to the server based on an allocation instruction for allocating a payment amount to a participating member. The server reads, based on the allocation request, the allocation share list obtained after the participating member of the funds sharing service performs automatic allocation processing on the payment amount, and sends the allocation share list to the terminal device. The terminal device acquires and displays the allocation share list. Alternatively, the terminal device acquires and displays the allocation share list that is sent by the server after the server performs automatic allocation processing on the payment amount included in the payment information after the server acquires the payment information generated after the order payment is performed by using the funds sharing service as a payment mode.

Step S1604: Receive an allocation instruction submitted for target participating members of the funds sharing service, to perform funds allocation based on a quantity of members of the target participating members and a payment amount included in the payment information.

The allocation instruction includes an editing instruction from a user for a participating member participating in payment amount allocation processing. The allocation instruction includes a member identifier of a target participating member obtained after editing that performs allocation processing on a payment amount.

In specific implementation, the participating member that initiates the order payment may edit a participating member that participates in the payment amount allocation processing. The allocation share list obtained after the automatic allocation processing can be edited, and an allocation instruction is submitted after editing.

Optionally, the terminal device of the participating member that initiates the order payment displays an allocation share display page. If it is detected that target participating members in the allocation share display page are edited, an allocation instruction that includes the payment amount and member identifiers of the target participating members is submitted to the server, to perform funds allocation based on the quantity of members of the target participating members and the payment amount. The server performs funds allocation based on the quantity of members of the target participating members and the payment amount, to obtain funds shares of the target participating members.

In an optional implementation provided in this embodiment, performing funds allocation based on the quantity of members corresponding to member identifiers that are included in the allocation instruction and the payment amount, to obtain the funds shares of the target participating members includes calculating allocation shares based on the payment amount and the quantity of members; and determining the allocation shares as the funds shares of the target participating members.

Specifically, the server calculates the funds shares of the target participating members based on the payment amount and the quantity of members of the target participating members. Optionally, the funds shares of the target participating members are sent to the terminal device of the participating member that initiates the order payment, to display a funds share display page.

Still using the foregoing example, all participating members in the allocation share list in the allocation share display page shown in FIG. 10 participate in payment amount allocation, and therefore, all participating members are selected. If the terminal device of the participating member 3 that initiates the order payment detects that the participating member cancels the selection of the participating member 1 and the participating member 4, an allocation instruction that includes the payment amount, the member identifier of the participating member 2, and the member identifier of the participating member 3 is sent to the server. The server calculates funds shares of the participating member 2 and the participating member 3 based on the payment amount and a quantity of members, that is, 2, of the target participating members, and the funds shares are m÷2. Further, the server can send m÷2 to the terminal device. After receiving m÷2, the terminal device updates the allocation share display page to a funds share display page shown in FIG. 11.

After detecting that the allocation control configured on the funds share display page is triggered, the terminal device submits an allocation confirmation instruction to the server, to perform deduction from balance amounts of the target participating members in the funds sharing service based on the funds shares.

Optionally, if an allocation instruction for a member factor in an allocation factor of the funds sharing service is detected, funds allocation is performed based on the quantity of members corresponding to the member identifiers in the allocation instruction and the payment amount to obtain a funds share of each target participating member, and this step forms a new implementation together with other processing steps provided in this embodiment. Optionally, the allocation factor includes a member factor and a funds factor. If a target participating member is edited, the member factor changes. If a funds share of the target participating member is edited, the funds factor changes.

Further, in an optional implementation provided in this embodiment, if configuration information for an allocation instruction for a member factor in an allocation factor of the funds sharing service and configuration information for a funds factor are detected, deduction is performed from a funds share of a target participating member corresponding to the allocation instruction in the configuration information in the funds sharing service is deducted based on the funds share of the target participating member.

Optionally, if a payment participation instruction for a member factor in a payment factor of the funds sharing service is obtained, and configuration information for a funds factor in the payment factor is obtained, deduction is performed from a balance amount of the payment participating member in the funds sharing service based on a funds share of the payment participating member corresponding to the payment participation instruction in the configuration information.

Specifically, funds allocation may be performed by editing only a target participating member, or funds allocation may be performed by editing only a funds share (that is automatically allocated), or funds allocation may be performed by editing a target participating member and a funds share.

Optionally, in the funds processing method provided in this embodiment, step S1602 to step S1606 can further be replaced with the following: acquiring and displaying a member list of a funds sharing service, where the member list is displayed after payment information is obtained by performing order payment based on the funds sharing service; if an updated funds share that is obtained by updating a funds share of a target participating member in the member list is acquired, calculating a sum of updated funds shares of the target participating members, and determining whether the sum is equal to a payment amount; and if yes, submitting, to the server, an allocation confirmation instruction that includes the updated funds shares of the target participating members to perform deduction from balance amounts of the target participating members in the funds sharing service based on the updated funds shares, otherwise, giving a prompt of the payment amount.

Step S1606: Receive an allocation confirmation instruction submitted for funds shares of the target participating members obtained for funds allocation, to perform deduction from balance amounts of the target participating members in the funds sharing service based on the funds shares.

Optionally, a balance amount of each participating member in the funds sharing service is determined based on a transfer-in amount of the participating member to the funds sharing service and funds shares for funds allocation.

In specific implementation, based on an allocation instruction for target participating members of the funds sharing service, the server performs funds allocation based on a quantity of members of the target participating members and a payment amount included in the payment information, to obtain funds shares of the target participating members and send the funds shares to the terminal device. The terminal device displays the funds shares of the target participating members, and receives an allocation confirmation instruction submitted for the funds shares of the target participating members obtained for funds allocation. After the allocation confirmation instruction is detected, the allocation confirmation instruction is submitted to the server, and the server performs deduction from the balance amounts of the target participating members in the funds sharing service based on the funds shares.

Optionally, after receiving the allocation confirmation instruction submitted for the funds shares of the target participating members obtained for funds allocation, the terminal device checks whether the sum of the funds shares is consistent with the payment amount. If yes, the terminal device submits the allocation confirmation instruction to the server, otherwise, displays an abnormality prompt of the funds shares.

Optionally, after the payment information is acquired, a payment bill of the funds sharing service is generated based on the payment information. Correspondingly, after the deduction is performed from the balance amounts of the target participating members in the funds sharing service based on the funds shares, an allocation result of the payment bill is generated based on the funds shares of the target participating members, and is associated with the payment bill. A service bill list of the funds sharing service is updated based on the payment bill and the allocation result.

To ensure a degree of awareness of participating members of the funds sharing service about a funds flow generated by the funds sharing service, the participating members can view the payment bill of the funds sharing service. To improve a degree of awareness of a participating member about an allocation result of the payment bill in the process of viewing the payment bill, in an optional implementation provided in this embodiment, a bill keyword of the payment bill is displayed when a service bill list of the funds sharing service is displayed to a participating user. Specifically, the bill keyword is determined in the following manner: generating bill keywords of the target participating members for the payment bill based on the allocation result of the target participating members for the payment amount; or generating a bill keyword of a participating member other than the target participating members in the participating members of the funds sharing service for the payment bill based on the allocation result of the payment amount.

Specifically, for a payment bill, a bill keyword of a target participating member participating in payment amount allocation corresponding to the payment bill is generated, and a bill keyword, for the payment bill, of another participating member that does not participate in the corresponding payment amount allocation is generated.

For example, a payment bill of the funds sharing service includes a funds transfer-in bill, a car rental bill, and a bus ticket bill. If a participating member that participates in payment amount allocation corresponding to the car rental bill but does not participate in payment amount allocation corresponding to the bus ticket bill queries a service bill of the funds sharing service, a service bill list display page shown in FIG. 12 is displayed to the participating user. "Four participating members participates in allocation by default, and m3 is allocated to me" is a bill keyword of the participating member for the car rental bill; "Having been modified to three participating members participating in allocation, excluding me" is a bill keyword of the participating member for the bus ticket bill.

As described above, all participating members have access to the payment bill of the funds sharing service. In addition, the participating members have access to the balance amounts of all the participating members. To ensure that the balance amounts of the participating members are updated in a timely manner, after deduction is performed from the balance amounts of the target participating members in the funds sharing service based on the funds shares, the following operations are further performed: Balance statuses of the target participating members in the funds sharing service are determined based on balance amounts of the target participating member obtained after the deduction; and a member funds list of the funds sharing service is updated based on the balance amounts and the balance statuses of the target participating members after the deduction.

Specifically, if the balance amounts of the target participating members after the deduction is less than 0, it is determined that the balance statuses of the target participating members for the funds sharing service are a first state (an arrears state). If the balance amounts of the target participating members after the deduction is greater than or equal to 0, it is determined that the balance statuses of the target participating members for the funds sharing service are a balance state. The member funds list of the funds sharing service is updated based on the balance amounts and the balance statuses of the target participating members after the deduction.

The member funds list includes the balance amounts and balance statuses of the participating members of the funds sharing service.

Optionally, if it is detected that an access request for member funds of the funds sharing service is submitted by a terminal device of a participating member, a member funds list and a total funds amount of the funds sharing service are read and sent to the terminal device, to render and display a member balance details page based on the member funds list and the total funds amount.

For example, the participating member 2 submits, by using the terminal device, an access request for member funds of the funds sharing service, and the terminal device submits the access request to the server. The server reads, based on the access request, the member funds list and the total funds amount of the funds sharing service, and sends the member funds list and the total funds amount to the terminal device. The terminal device renders and displays a member balance details page shown in FIG. 13 based on the member funds list and the total funds amount.

Still using FIG. 13 as an example, because a balance amount of the participating member 2 is less than 0, the participating member 2 needs to perform funds recharging. It ensures proper apportioning when funds apportioning is performed on the participating members in the balance state.

In an optional implementation provided in this embodiment, a participating member with a balance status being the arrears state performs recharging in the following manner: if a recharging instruction for a balance amount from any participating member having a balance status being a first state is detected, transferring funds corresponding to a transfer-in amount in a member account of the any participating member to a fund account of a creating member of the funds sharing service and locking the fund account; updating a balance amount of the any participating member and a total funds amount of the funds sharing service based on the transfer-in amount; and updating the member funds list based on the balance amount, the total funds amount, and the balance status corresponding to the balance amount.

Specifically, recharging processing is performed based on a recharging instruction of a participating member with a balance status being the first state, a balance amount of the participating member and a total funds amount of the funds sharing service are updated based on a recharging result, and the member funds list of the funds sharing service is updated.

In the member balance details page shown in FIG. 13, the participating member 2 triggers a configured recharging control and performs recharging for arrears of 200 yuan. When the participating member 2 transfers 200 yuan to the funds sharing service, the balance amount of the participating member 2 is updated to 0 and the total funds amount is increased by 200 yuan.

A participating member having arrears performs recharging. In addition, a batch refund can be made by the creating member or the management member for a participating member having a balance. Specifically, if the creating member or the management member accesses the member balance details page, a batch refund control is configured on the member balance details page; or if other participating members access the member balance details page, the batch refund control is not configured.

The creating member or the management member can trigger the batch refund control to perform apportioning processing of the total funds amount of the funds sharing service. In an optional implementation provided in this embodiment, the apportioning processing is performed in the following manner: if an apportioning instruction for a total funds amount of the funds sharing service is detected, acquiring an apportioning member identifier included and apportioning configuration information of an apportioning funds amount; and transferring apportioning funds corresponding to the apportioning funds amount in a fund account of a creating member of the funds sharing service to a member account of an apportioning member corresponding to the apportioning member identifier.

Optionally, an apportioning instruction submitted by a terminal device of the creating member or the management member for the total funds amount of the funds sharing service is acquired; and apportioning processing is performed based on the apportioning instruction, and a balance amount of an apportioning member and the total funds amount of the funds sharing service are updated based on an apportioning result.

For example, if the creating member detects that the creating member triggers the batch refund control configured on the member balance details page, a jump is made to apportioning information collection page shown in FIG. 14 to collect apportioning configuration information. After it is detected that a confirmation control configured on the apportioning information collection page is triggered, apportioning configuration information entered based on the apportioning information collection page is acquired, and an apportioning instruction is submitted to the server based on the apportioning configuration information so that the server performs apportioning processing.

In addition, step S1602 to step S1606 can further be replaced with the following: acquiring and displaying a member list of a funds sharing service, where the member list is displayed after payment information is obtained by performing order payment based on the funds sharing service; receiving an allocation instruction submitted for target participating members of the funds sharing service, to perform funds allocation; and receiving an allocation confirmation instruction submitted for funds shares of the target participating members obtained for funds allocation, to perform deduction from balance amounts.

An embodiment of a funds processing apparatus provided in this specification is as follows: In the above embodiment, a funds processing method is provided. Correspondingly, a funds processing apparatus is further provided, and is described below with reference to the accompanying drawings.

FIG. 17 is a schematic diagram illustrating a funds processing apparatus according to an embodiment.

The apparatus embodiments correspond to the method embodiments, and therefore are briefly described. For related parts, references can be made to corresponding descriptions of the method embodiments provided above. The apparatus embodiments described below are merely examples.

This embodiment provides a funds processing apparatus. The apparatus includes a payment information acquisition module 1702, configured to acquire payment information of a funds sharing service provisioned for a specific payment intention, where the payment information is obtained after order payment is made by using the funds sharing service as a payment mode; a funds allocation module 1704, configured to: if an allocation instruction for target participating members of the funds sharing service is detected, perform funds allocation based on a quantity of members of the target participating members and a payment amount included in the payment information, to obtain funds shares of the target participating members; and a deduction module 1706, configured to perform deduction from balance amounts of the target participating members in the funds sharing service based on the funds shares.

An embodiment of another funds processing apparatus provided in this specification is as follows: In the above embodiment, another funds processing method is provided. Correspondingly, another funds processing apparatus is further provided, and is described below with reference to the accompanying drawings.

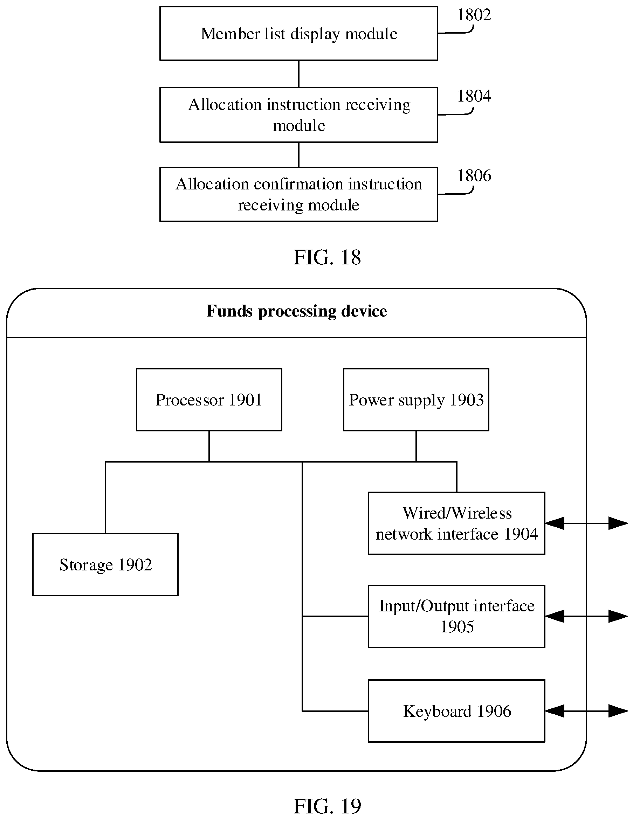

FIG. 18 is a schematic diagram illustrating a funds processing apparatus according to an embodiment.

The apparatus embodiments correspond to the method embodiments, and therefore are briefly described. For related parts, references can be made to corresponding descriptions of the method embodiments provided above. The apparatus embodiments described below are merely examples.

This embodiment provides a funds processing apparatus. The apparatus includes a member list display module 1802, configured to acquire and display a member list of a funds sharing service, where the member list is displayed after payment information is obtained by performing order payment based on the funds sharing service; an allocation instruction receiving module 1804, configured to receive an allocation instruction submitted for target participating members of the funds sharing service, to perform funds allocation based on a quantity of members of the target participating members and a payment amount included in the payment information; and an allocation confirmation instruction receiving module 1806, configured to receive an allocation confirmation instruction submitted for funds shares of the target participating members obtained for funds allocation, to perform deduction from balance amounts of the target participating members in the funds sharing service based on the funds shares.

An embodiment of a funds processing device provided in this specification is as follows: Corresponding to the funds processing method described above, based on the same technical concept, one or more embodiments of this specification further provide a funds processing device. The funds processing device is configured to perform the funds processing method provided above. FIG. 6 is a schematic structural diagram illustrating a funds processing device according to one or more embodiments of this specification.

The funds processing device provided in this embodiment includes the following: As shown in FIG. 19, the funds processing device can vary greatly based on configuration or performance, and can include one or more processors 1901 and a storage 1902. The storage 1902 can store one or more storage applications or data. The storage 1902 can be used for transitory storage or persistent storage. The application stored in the storage 1902 can include one or more modules (not shown in the figure), and each module can include a series of computer-executable instructions in the funds processing device. Still further, the processor 1901 can be configured to communicate with the storage 1902 to execute, on the funds processing device, a series of computer-executable instructions in the storage 1902. The funds processing device can further include one or more power supplies 1903, one or more wired or wireless network interfaces 1904, one or more input/output interfaces 1905, one or more keyboards 1906, etc.

In a specific embodiment, the funds processing device includes a storage and one or more programs. The one or more programs are stored in the storage, the one or more programs can include one or more modules, and each module can include a series of computer-executable instructions in the funds processing device. The one or more processors are configured to execute the one or more programs, including the following computer-executable instructions: acquiring payment information of a funds sharing service provisioned for a specific payment intention, where the payment information is obtained after order payment is made by using the funds sharing service as a payment mode; if an allocation instruction for target participating members of the funds sharing service is detected, performing funds allocation based on a quantity of members of the target participating members and a payment amount included in the payment information, to obtain funds shares of the target participating members; and performing deduction from balance amounts of the target participating members in the funds sharing service based on the funds shares.

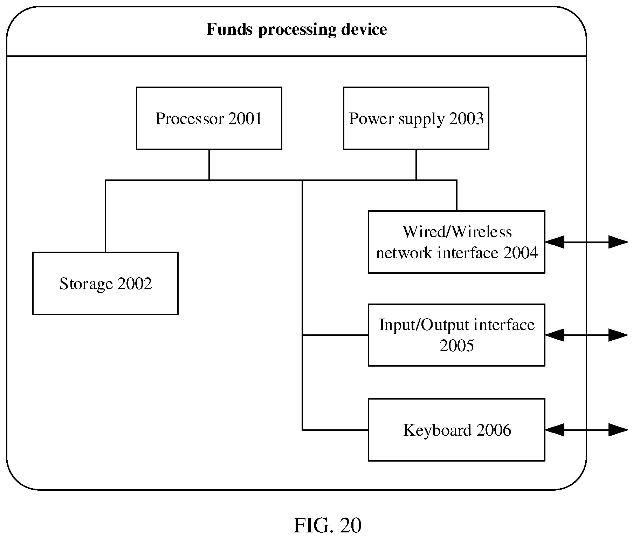

An embodiment of another funds processing device provided in this specification is as follows: Corresponding to the another funds processing method described above, based on the same technical concept, one or more embodiments of this specification further provide another funds processing device. The funds processing device is configured to perform the funds processing method provided above. FIG. 20 is a schematic structural diagram illustrating a funds processing device according to one or more embodiments of this specification.

The funds processing device provided in this embodiment includes the following: As shown in FIG. 20, the funds processing device can vary greatly based on configuration or performance, and can include one or more processors 2001 and a storage 2002. The storage 2002 can store one or more storage applications or data. The storage 2002 can be used for transitory storage or persistent storage. The application stored in the storage 2002 can include one or more modules (not shown in the figure), and each module can include a series of computer-executable instructions in the funds processing device. Still further, the processor 2001 can be configured to communicate with the storage 2002 to execute, on the funds processing device, a series of computer-executable instructions in the storage 2002. The funds processing device can further include one or more power supplies 2003, one or more wired or wireless network interfaces 2004, one or more input/output interfaces 2005, one or more keyboards 2006, etc.

In a specific embodiment, the funds processing device includes a storage and one or more programs. The one or more programs are stored in the storage, the one or more programs can include one or more modules, and each module can include a series of computer-executable instructions in the funds processing device. The one or more processors are configured to execute the one or more programs, including the following computer-executable instructions: acquiring and displaying a member list of a funds sharing service, where the member list is displayed after payment information is obtained by performing order payment based on the funds sharing service; receiving an allocation instruction submitted for target participating members of the funds sharing service, to perform funds allocation based on a quantity of members of the target participating members and a payment amount included in the payment information; and receiving an allocation confirmation instruction submitted for funds shares of the target participating members obtained for funds allocation, to perform deduction from balance amounts of the target participating members in the funds sharing service based on the funds shares.

An embodiment of a storage medium provided in this specification is as follows: Corresponding to the funds processing method described above, based on the same technical concept, one or more embodiments of this specification further provide a storage medium.

The storage medium provided in this embodiment is configured to store computer-executable instructions. When the computer-executable instructions are executed by a processor, the following procedure is implemented: acquiring payment information of a funds sharing service provisioned for a specific payment intention, where the payment information is obtained after order payment is made by using the funds sharing service as a payment mode; if an allocation instruction for target participating members of the funds sharing service is detected, performing funds allocation based on a quantity of members of the target participating members and a payment amount included in the payment information, to obtain funds shares of the target participating members; and performing deduction from balance amounts of the target participating members in the funds sharing service based on the funds shares.

It should be noted that the embodiments of the storage medium in this specification and the embodiments of the funds processing method in this specification are based on the same invention concept. Therefore, for specific implementation of the embodiments, references can be made to the above corresponding method. Details are omitted here for simplicity.

An embodiment of another storage medium provided in this specification is as follows: Corresponding to the another funds processing method described above, based on the same technical concept, one or more embodiments of this specification further provide another storage medium.

The storage medium provided in this embodiment is configured to store computer-executable instructions. When the computer-executable instructions are executed by a processor, the following procedure is implemented: acquiring and displaying a member list of a funds sharing service, where the member list is displayed after payment information is obtained by performing order payment based on the funds sharing service; receiving an allocation instruction submitted for target participating members of the funds sharing service, to perform funds allocation based on a quantity of members of the target participating members and a payment amount included in the payment information; and receiving an allocation confirmation instruction submitted for funds shares of the target participating members obtained for funds allocation, to perform deduction from balance amounts of the target participating members in the funds sharing service based on the funds shares.

It should be noted that the embodiments of the storage medium in this specification and the embodiments of the another funds processing method in this specification are based on the same invention concept. Therefore, for specific implementation of the embodiments, references can be made to the above corresponding method. Details are omitted here for simplicity.

Specific embodiments of this specification are described above. Other embodiments fall within the scope of the appended claims. In some cases, the actions or steps described in the claims can be performed in an order different from that in the embodiments, and the desired results can still be achieved. In addition, the process depicted in the accompanying drawings does not necessarily need a particular sequence or consecutive sequence to achieve the desired results. In some implementations, multitasking and parallel processing are feasible or may be advantageous.

In the 1930s, whether a technical improvement is a hardware improvement (for example, an improvement to a circuit structure, such as a diode, a transistor, or a switch) or a software improvement (an improvement to a method procedure) can be clearly distinguished. However, with development of technologies, improvement to many existing method procedures can be considered as direct improvement to hardware circuit structures. Almost all designers obtain a corresponding hardware circuit structure by programming an improved method procedure into a hardware circuit. Therefore, improvement to a method procedure can be implemented by using a hardware entity module. For example, a programmable logic device (PLD) (for example, a field programmable gate array (FPGA)) is such an integrated circuit, and a logical function thereof is determined by a user through device programming. A designer autonomously performs programming to "integrate" a digital system onto a PLD, without requesting a chip manufacturer to design and manufacture a dedicated integrated circuit chip. In addition, currently, instead of manually manufacturing an integrated circuit chip, such programming is usually implemented by using "logic compiler" software. The logic compiler software is similar to a software compiler used during program development and writing. Original code to be compiled needs to be written in a specific programming language. The specific programming language is referred to as a hardware description language (HDL). There is not only one HDL, but there are many HDLs such as Advanced Boolean Expression Language (ABEL), Altera Hardware Description Language (AHDL), Confluence, Cornell University Programming Language (CUPL), HDCal, Java Hardware Description Language (JHDL), Lava, Lola, MyHDL, PALASM, and Ruby Hardware Description Language (RHDL). Currently, Very-High-Speed Integrated Circuit Hardware Description Language (VHDL) and Verilog are most commonly used. It should also be clear to a person skilled in the art that a hardware circuit for implementing a logical method procedure can be easily obtained by performing slight logic programming on the method procedure by using the above-mentioned several hardware description languages and programming the method procedure into an integrated circuit.

The controller may be implemented in any suitable manner. For example, the controller may be in a form of a microprocessor or a processor and a computer-readable medium storing computer-readable program code (for example, software or firmware) that can be executed by the (micro) processor, a logic gate, a switch, an application-specific integrated circuit (ASIC), a programmable logic controller, and an embedded microcontroller. Examples of the controller include but are not limited to the following microcontrollers: ARC 625D, Atmel AT91SAM, Microchip PIC18F26K20, and Silicone Labs C8051F320. A storage controller can further be implemented as a part of control logic of a storage. A person skilled in the art also knows that, in addition to implementing the controller by using only computer-readable program code, logic programming may be performed on a method step, so that the controller implements the same function in a form of a logic gate, a switch, an application-specific integrated circuit, a programmable logic controller, an embedded microcontroller, etc. Therefore, the controller may be considered as a hardware component, and an apparatus included in the controller and configured to implement various functions may also be considered as a structure in the hardware component. Alternatively, an apparatus for implementing various functions may be considered as a software module that can implement a method or a structure in the hardware component.

The system, apparatus, module, or unit described in the above-mentioned embodiments can be specifically implemented by a computer chip or entity, or may be implemented by a service that has a specific function. A typical implementation device is a computer. Specifically, the computer can be, for example, a personal computer, a laptop computer, a cellular phone, a camera phone, a smartphone, a personal digital assistant, a media player, a navigation device, an e-mail device, a game console, a tablet computer, a wearable device, or any combination of these devices.

For ease of description, the above-mentioned apparatus is divided into units based on functions. Certainly, when the embodiments of this specification are implemented, functions of the units can be implemented in one or more pieces of software and/or hardware.

A person skilled in the art should understand that one or more embodiments of this specification can be provided as methods, systems, or computer program services. Therefore, one or more embodiments of this specification can be in a form of hardware only embodiments, software only embodiments, or embodiments with a combination of software and hardware. In addition, this specification can use a form of a computer program service that is implemented on one or more computer-usable storage media (including but not limited to a disk storage, a CD-ROM, an optical storage, etc.) that include computer-usable program code.

This specification is described with reference to the flowcharts and/or block diagrams of the method, the device (system), and the computer program service according to the embodiments of this specification. It should be understood that computer program instructions may be used to implement each process and/or each block in the flowcharts and/or the block diagrams and a combination of a process and/or a block in the flowcharts and/or the block diagrams. These computer program instructions can be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions can be stored in a computer-readable memory that can instruct the computer or the another programmable data processing device to work in a specific way, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions can be loaded onto the computer or the another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

In a typical configuration, a computing device includes one or more processors (CPU), an input/output interface, a network interface, and a memory.

The memory may include at least one of a non-persistent memory, a random access memory (RAM), and/or a nonvolatile memory in a computer-readable medium, for example, a read-only memory (ROM) or a flash read-only memory (flash RAM). The memory is an example of the computer-readable medium.

The computer-readable medium includes persistent, non-persistent, movable, and unmovable media that can store information by using any method or technology. The information can be computer-readable instructions, a data structure, a program module, or other data. Examples of a computer storage medium include but are not limited to a phase change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a magnetic cassette, a magnetic tape/magnetic disk storage or another magnetic storage device, or any other non-transmission medium that can be used to store information that can be accessed by a computing device. As described in this specification, the computer-readable medium does not include computer-readable transitory media (transitory media) such as a modulated data signal and a carrier.

It should be further noted that, the terms "include", "contain", or their any other variants are intended to cover a non-exclusive inclusion, so that a process, a method, a product, or a device that includes a list of elements not only includes those elements but also includes other elements which are not expressly listed, or further includes elements inherent to such a process, method, product, or device. Without more constraints, an element preceded by "includes a ..." does not preclude the existence of additional identical elements in the process, method, product, or device that includes the element.

One or more embodiments of this specification can be described in the general context of computer-executable instructions executed by a computer, for example, a program module. Typically, the program module includes a routine, a program, an object, a component, a data structure, etc. that performs a specific task or implement a specific abstract data type. Alternatively, the one or more embodiments of this specification can be practiced in distributed computing environments. In the distributed computing environments, tasks are performed by remote processing devices connected through a communication network. In the distributed computing environment, a program module can be located in local and remote computer storage media including a storage device.

Embodiments of this specification are all described in a progressive manner. For same or similar parts in the embodiments, mutual references can be made to the embodiments. Each embodiment focuses on a difference from other embodiments. In particular, for the system embodiments, because the system embodiments are basically similar to the method embodiments, descriptions are relatively simple. For related parts, references can be made to the descriptions in the method embodiments.

The above descriptions are merely embodiments of this specification and are not intended to limit this specification. A person skilled in the art can make various changes and variations to this specification. Any modification, equivalent replacement, improvement, etc. made without departing from the spirit and principle of this specification shall fall within the scope of the claims in this specification.

## Claims

1. A funds processing method, comprising:
acquiring payment information of a funds sharing service provisioned for a specific payment intention, wherein the payment information is obtained after order payment is made by using the funds sharing service as a payment mode;
if an allocation instruction for target participating members of the funds sharing service is detected, performing funds allocation based on a quantity of members of the target participating members and a payment amount comprised in the payment information, to obtain funds shares of the target participating members; and
performing deduction from balance amounts of the target participating members in the funds sharing service based on the funds shares.

2. The funds processing method according to claim 1, wherein a total amount of the balance amounts of the participating members of the funds sharing service is a total funds amount of the funds sharing service; and
after the participating members perform funds transfer-in to the funds sharing service, transferring corresponding transfer-in funds to a fund account of a creating member of the funds sharing service and locking the fund account, and updating, based on the transfer-in funds, the total funds amount and the balance amounts of the participating members that perform the funds transfer-in.

3. The funds processing method according to claim 1, wherein performing funds allocation based on the quantity of members corresponding to member identifiers that are comprised in the allocation instruction and the payment amount, to obtain the funds shares of the target participating members comprises:
calculating allocation shares based on the payment amount and the quantity of members; and
determining the allocation shares as the funds shares of the target participating members.

4. The funds processing method according to claim 1, wherein after the step of acquiring payment information of a funds sharing service provisioned for a specific payment intention is performed, the method further comprises:
if a payment participation instruction for a participating member in a payment factor of the funds sharing service is obtained, and configuration information for funds to be allocated in the payment factor is obtained, performing deduction from a balance amount of the payment participating member in the funds sharing service based on a funds share of the payment participating member corresponding to the payment participation instruction in the configuration information.

5. The funds processing method according to claim 1, further comprising:
calculating funds allocation shares based on the quantity of members of the participating members of the funds sharing service and the payment amount; and
performing deduction from balance amounts of the participating members in the funds sharing service based on the funds allocation shares, and generating an allocation share list of the payment amount based on the funds allocation shares and member identifiers of the participating members.

6. The funds processing method according to claim 1, further comprising:
generating a payment bill of the funds sharing service based on the payment information;
generating an allocation result of the payment bill based on the funds shares of the target participating members, and associating the allocation result with the payment bill; and
updating a service bill list of the funds sharing service based on the payment bill and the allocation result.

7. The funds processing method according to claim 6, further comprising:
generating bill keywords of the target participating members for the payment bill based on the allocation result of the target participating members for the payment amount; and/or
generating a bill keyword of a participating member other than the target participating members in the participating members of the funds sharing service for the payment bill based on the allocation result of the payment amount.

8. The funds processing method according to claim 1, wherein after the step of performing deduction from balance amounts of the target participating members in the funds sharing service based on the funds shares is performed, the method further comprises:
determining balance statuses of the target participating members in the funds sharing service based on balance amounts of the target participating member obtained after the deduction; and
updating a member funds list of the funds sharing service based on the balance amounts and the balance statuses of the target participating members after the deduction.

9. The funds processing method according to claim 8, further comprising:
if a recharging instruction for a balance amount from any participating member having a balance status being a first state is detected, transferring funds corresponding to a transfer-in amount in a member account of the any participating member to a fund account of a creating member of the funds sharing service and locking the fund account;
updating a balance amount of the any participating member and a total funds amount of the funds sharing service based on the transfer-in amount; and
updating the member funds list based on the balance amount, the total funds amount, and the balance status corresponding to the balance amount.

10. The funds processing method according to claim 8, further comprising:
if an apportioning instruction for a total funds amount of the funds sharing service is detected, acquiring an apportioning member identifier comprised and apportioning configuration information of an apportioning funds amount; and
transferring apportioning funds corresponding to the apportioning funds amount in a fund account of a creating member of the funds sharing service to a member account of an apportioning member corresponding to the apportioning member identifier.

11. The funds processing method according to claim 1, wherein before the step of acquiring payment information of a funds sharing service provisioned for a specific payment intention is performed, the method further comprises:
when it is detected that a user triggers a predetermined interface, generating the funds sharing service that uses the user as a creating member;
determining, as a participating member of the funds sharing service, a user invited by the creating member; and
if a management member configuration instruction of the creating member is detected, determining, as a management member of the funds sharing service, a participating member corresponding to a member identifier comprised in the management member configuration instruction.

12. The funds processing method according to claim 1, wherein before the step of acquiring payment information of a funds sharing service provisioned for a specific payment intention is performed, the method further comprises:
querying a funds sharing service set that a participating member corresponding to the payment information participates in, and reading an available-funds amount of the participating member in each funds sharing service in the funds sharing service set;
determining a payment tag of each funds sharing service based on the available-funds amount of the participating member in the funds sharing service and the payment amount; and
generating a payment mode list that comprises a service identifier and the payment tag of the funds sharing service.

13. The funds processing method according to claim 12, wherein the determining a payment tag of each funds sharing service based on the available-funds amount of the participating member in the funds sharing service and the payment amount comprises:
calculating a difference between the available-funds amount of the participating member in the funds sharing service and the payment amount; and
determining that a payment tag of a funds sharing service with the difference greater than or equal to a predetermined threshold is an available-funds amount of the participating member in the funds sharing service, and determining that a payment tag of a funds sharing service with the difference less than the predetermined threshold is a non-payment tag.

14. The funds processing method according to claim 1, wherein a balance amount of each participating member in the funds sharing service is determined based on a transfer-in amount of the participating member to the funds sharing service and funds shares for funds allocation; and
an available-funds amount of the participating member is configured for the funds sharing service, and the available-funds amount is determined based on an available-funds strategy of the funds sharing service and an expenditure of the participating member for funds payment.

15. The funds processing method according to claim 14, wherein the available-funds strategy is configured in the following manner:
acquiring strategy configuration information submitted by a creating member or a management member of the funds sharing service, and sending, to the management member or the creating member, a strategy configuration prompt that comprises the strategy configuration information; and
if a confirmation instruction of the management member or the creating member for the strategy configuration prompt is detected, generating the available-funds strategy of the funds sharing service based on the strategy configuration information.

16. The funds processing method according to claim 1, further comprising:
after funds transfer-in information that is based on a collection identifier of the funds sharing service is detected, reading key information in the funds transfer-in information; and
generating a funds transfer-in bill based on the key information and updating a service bill list of the funds sharing service, and updating dynamic information of the funds sharing service based on the key information.

17. The funds processing method according to claim 16, wherein the updating dynamic information of the funds sharing service based on the key information comprises:
if a transfer-in user identifier in the key information does not match a member identifier of a participating member of the funds sharing service, desensitizing the transfer-in user identifier; and
generating dynamic information based on the desensitized user identifier and a member identifier of an access member of the collection identifier, a transfer-in amount, and/or an identified collection channel in the key information, and adding the dynamic information to a dynamic information list of the funds sharing service.

18. The funds processing method according to claim 17, further comprising:
sending, to a user that the transfer-in user identifier belongs to, a participating invitation message for the funds sharing service based on a member invitation tag configured based on the collection identifier; and
if it is detected that the user submits a confirmation instruction for the participating invitation message, determining the user as a participating member of the funds sharing service based on a participating confirmation instruction of a creating member and/or a management member of the funds sharing service.

19. A funds processing method, comprising:
acquiring and displaying a member list of a funds sharing service, wherein the member list is displayed after payment information is obtained by performing order payment based on the funds sharing service;
receiving an allocation instruction submitted for target participating members of the funds sharing service, to perform funds allocation based on a quantity of members of the target participating members and a payment amount comprised in the payment information; and
receiving an allocation confirmation instruction submitted for funds shares of the target participating members obtained for funds allocation, to perform deduction from balance amounts of the target participating members in the funds sharing service based on the funds shares.

20. A funds processing apparatus, comprising:
a payment information acquisition module, configured to acquire payment information of a funds sharing service provisioned for a specific payment intention, wherein the payment information is obtained after order payment is made by using the funds sharing service as a payment mode;
a funds allocation module, configured to: if an allocation instruction for target participating members of the funds sharing service is detected, perform funds allocation based on a quantity of members of the target participating members and a payment amount comprised in the payment information, to obtain funds shares of the target participating members; and
a deduction module, configured to perform deduction from balance amounts of the target participating members in the funds sharing service based on the funds shares.

21. A funds processing apparatus, comprising:
a member list display module, configured to acquire and display a member list of a funds sharing service, wherein the member list is displayed after payment information is obtained by performing order payment based on the funds sharing service;
an allocation instruction receiving module, configured to receive an allocation instruction submitted for target participating members of the funds sharing service, to perform funds allocation based on a quantity of members of the target participating members and a payment amount comprised in the payment information; and
an allocation confirmation instruction receiving module, configured to receive an allocation confirmation instruction submitted for funds shares of the target participating members obtained for funds allocation, to perform deduction from balance amounts of the target participating members in the funds sharing service based on the funds shares.

22. A funds processing device, comprising:
a processor; and
a storage configured to store computer-executable instructions, wherein when the computer-executable instructions are executed, the processor is enabled to perform the following operations:
acquiring payment information of a funds sharing service provisioned for a specific payment intention, wherein the payment information is obtained after order payment is made by using the funds sharing service as a payment mode;
if an allocation instruction for target participating members of the funds sharing service is detected, performing funds allocation based on a quantity of members of the target participating members and a payment amount comprised in the payment information, to obtain funds shares of the target participating members; and
performing deduction from balance amounts of the target participating members in the funds sharing service based on the funds shares.

23. A funds processing device, comprising:
a processor; and
a storage configured to store computer-executable instructions, wherein when the computer-executable instructions are executed, the processor is enabled to perform the following operations:
acquiring and displaying a member list of a funds sharing service, wherein the member list is displayed after payment information is obtained by performing order payment based on the funds sharing service;
receiving an allocation instruction submitted for target participating members of the funds sharing service, to perform funds allocation based on a quantity of members of the target participating members and a payment amount comprised in the payment information; and
receiving an allocation confirmation instruction submitted for funds shares of the target participating members obtained for funds allocation, to perform deduction from balance amounts of the target participating members in the funds sharing service based on the funds shares.

24. A storage medium, configured to store computer-executable instructions, wherein when the computer-executable instructions are executed by a processor, the following procedure is implemented:
acquiring payment information of a funds sharing service provisioned for a specific payment intention, wherein the payment information is obtained after order payment is made by using the funds sharing service as a payment mode;
if an allocation instruction for target participating members of the funds sharing service is detected, performing funds allocation based on a quantity of members of the target participating members and a payment amount comprised in the payment information, to obtain funds shares of the target participating members; and
performing deduction from balance amounts of the target participating members in the funds sharing service based on the funds shares.

25. A storage medium, configured to store computer-executable instructions, wherein when the computer-executable instructions are executed by a processor, the following procedure is implemented:
acquiring and displaying a member list of a funds sharing service, wherein the member list is displayed after payment information is obtained by performing order payment based on the funds sharing service;
receiving an allocation instruction submitted for target participating members of the funds sharing service, to perform funds allocation based on a quantity of members of the target participating members and a payment amount comprised in the payment information; and
receiving an allocation confirmation instruction submitted for funds shares of the target participating members obtained for funds allocation, to perform deduction from balance amounts of the target participating members in the funds sharing service based on the funds shares.
